(19) Europäisches Patentamt
European Patent Office
Office européen des brevets

(11) EP 2 886 607 A1

(12) EUROPEAN PATENT APPLICATION
published in accordance with Art. 153(4) EPC

(43) Date of publication:
**24.06.2015 Bulletin 2015/26**

(21) Application number: **13829167.9**

(22) Date of filing: **12.08.2013**

(51) Int Cl.:
***C08L 77/06*** (2006.01) ***C08G 69/40*** (2006.01)
***C08K 5/00*** (2006.01)

(86) International application number:
**PCT/JP2013/071838**

(87) International publication number:
**WO 2014/027650 (20.02.2014 Gazette 2014/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.08.2012 JP 2012179741**
**14.08.2012 JP 2012179742**

(71) Applicant: **Mitsubishi Gas Chemical Company, Inc.**
**Tokyo 100-8324 (JP)**

(72) Inventors:
- **TAKEO, Mayumi**
**Hiratsuka-shi**
**Kanagawa 254-0016 (JP)**
- **KATOU, Tomonori**
**Hiratsuka-shi**
**Kanagawa 254-0016 (JP)**
- **MITADERA, Jun**
**Hiratsuka-shi**
**Kanagawa 254-0016 (JP)**
- **SATOU, Kazuya**
**Hiratsuka-shi**
**Kanagawa 254-0016 (JP)**
- **TUNAKA, Nobuhide**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

# (54) POLYETHER-POLYAMIDE COMPOSITION

(57) Provided is a polyether polyamide composition including a polyether polyamide in which a diamine constituent unit thereof is derived from a specified polyether diamine compound and a xylylenediamine, and a dicarboxylic acid constituent unit thereof is derived from an α, ω-linear aliphatic dicarboxylic acid having from 4 to 20 carbon atoms and a stabilizer.



Printed by Jouve, 75001 PARIS (FR)

## Description

TECHNICAL FIELD

The present invention relates to a polyether polyamide composition, and in detail, the invention relates to a polyether polyamide composition which is suitable for materials of automobile parts, electric parts, electronic parts, and the like.

BACKGROUND ART

Rubbers having a chemical crosslinking point by vulcanization cannot be recycled and have a high specific gravity. On the other hand, thermoplastic elastomers are composed of a phase separation structure containing a physical crosslinking point by crystallization or the like as a hard segment and an amorphous portion as a soft segment, so that the thermoplastic elastomers have such characteristic features that they can be easily subjected to melt molding processing, are able to be recycled, and have a low specific gravity. Accordingly, the thermoplastic elastomers are watched in the fields of automobile parts, electric and electronic parts, sporting goods, and the like.

As the thermoplastic elastomers, there are developed a variety of thermoplastic elastomers such as polyolefin-based, polyurethane-based, polyester-based, polyamide-based, polystyrene-based, or polyvinyl chloride-based thermoplastic elastomers, etc. Of these, polyurethane-based, polyester-based, or polyamide-based thermoplastic elastomers are known as an elastomer having relatively excellent heat resistance.

Above all, polyamide elastomers are excellent in terms of flexibility, low specific gravity, friction resistance and abrasion resistance properties, elasticity, bending fatigue resistance, low-temperature properties, molding processability, and chemical resistance, so that they are widely used as materials of tubes, hoses, sporting goods, seals, packings, automobile parts, electric parts, electronic parts, and the like.

As the polyamide elastomers, there are known polyether polyamide elastomers containing a polyamide block as a hard segment and a polyether block as a soft segment, and the like. For example, Patent Documents 1 and 2 disclose polyether polyamide elastomers containing an aliphatic polyamide such as polyamide 12, etc. as a base.

CITATION LIST

PATENT LITERATURE

Patent Document 1: JP-A-2004-161964

Patent Document 2: JP-A-2004-346274

SUMMARY OF INVENTION

TECHNICAL PROBLEM

In the polyether polyamide elastomers disclosed in Patent Documents 1 and 2, aliphatic polyamides such as polyamide 12, etc. are utilized as a polyamide component thereof; however, since the polyamide component has a low melting point, such polyether polyamide elastomers are insufficient in terms of heat resistance in applications for which they are utilized in a high-temperature environment.

On the other hand, polyamides containing a xylylene group in a polymer main chain thereof are also known as the polyamide. The polyamides containing a xylylene group in a polymer main chain thereof have such a characteristic feature that they are high in rigidity as compared with aliphatic polyamides such as nylon 6, etc.; however, since a radical is easily formed at a benzyl methylene position from the structural standpoint, they are insufficient in terms of heat stability and heat aging resistance.

A technical problem to be solved by the present invention is to provide a polyether polyamide composition having excellent heat stability and heat aging resistance while holding melt moldability, toughness, flexibility, and rubbery properties of a polyamide elastomer.

SOLUTION TO PROBLEM

The present invention provides the following polyether polyamide compositions and molded articles.

<1> A polyether polyamide composition comprising a polyether polyamide (A1) in which a diamine constituent unit thereof is derived from a polyether diamine compound (a1-1) represented by the following general formula (1) and a xylylenediamine (a-2), and a dicarboxylic acid constituent unit thereof is derived from an $\alpha,\omega$-linear aliphatic dicarboxylic acid having from 4 to 20 carbon atoms and a stabilizer (B):

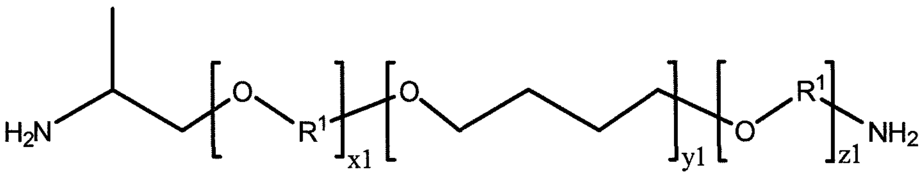
(1)

wherein (x1 + z1) is from 1 to 30; y1 is from 1 to 50; and $R^1$ represents a propylene group.
<2> A molded article comprising the polyether polyamide composition as set forth above in <1>.
<3> A polyether polyamide composition comprising a polyether polyamide (A2) in which a diamine constituent unit thereof is derived from a polyether diamine compound (a2-1) represented by the following general formula (2) and a xylylenediamine (a-2), and a dicarboxylic acid constituent unit thereof is derived from an $\alpha,\omega$-linear aliphatic dicarboxylic acid having from 4 to 20 carbon atoms and a stabilizer (B):

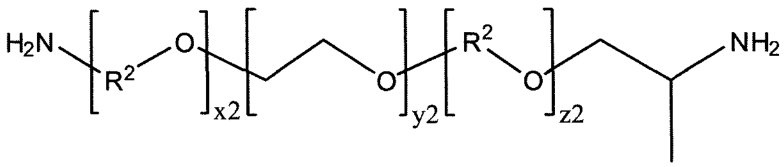
(2)

wherein (x2 + z2) is from 1 to 60; y2 is from 1 to 50; and $R^2$ represents a propylene group.
<4> A molded article comprising the polyether polyamide composition as set forth above in <3>.

ADVANTAGEOUS EFFECTS OF INVENTION

The polyether polyamide composition of the present invention has excellent heat stability and heat aging resistance while holding melt moldability, toughness, flexibility, and rubbery properties of an existing polyamide elastomer.

DESCRIPTION OF EMBODIMENTS

[Polyether polyamide composition]

As a first invention, the polyether polyamide composition of the present invention comprises a polyether polyamide (A1) in which a diamine constituent unit thereof is derived from a polyether diamine compound (a1-1) represented by the following general formula (1) and a xylylenediamine (a-2), and a dicarboxylic acid constituent unit thereof is derived from an $\alpha,\omega$-linear aliphatic dicarboxylic acid having from 4 to 20 carbon atoms and a stabilizer (B):

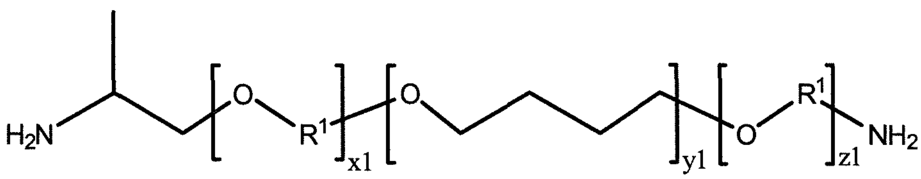
(1)

wherein (x1 + z1) is from 1 to 30; y1 is from 1 to 50; and $R^1$ represents a propylene group.
In addition, as a second invention, the polyether polyamide composition of the present invention comprises a polyether polyamide (A2) in which a diamine constituent unit thereof is derived from a polyether diamine compound (a2-1) represented by the following general formula (2) and a xylylenediamine (a-2), and a dicarboxylic acid constituent unit thereof is derived from an $\alpha,\omega$-linear aliphatic dicarboxylic acid having from 4 to 20 carbon atoms and a stabilizer (B):

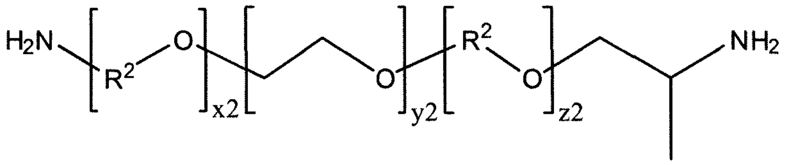

(2)

wherein (x2 + z2) is from 1 to 60; y2 is from 1 to 50; and $R^2$ represents a propylene group.

<Polyether polyamides (A1) and (A2)>

The polyether polyamide (A1) is one in which a diamine constituent unit thereof is derived from a polyether diamine compound (a1-1) represented by the foregoing general formula (1) and a xylylenediamine (a-2), and a dicarboxylic acid constituent unit thereof is derived from an $\alpha,\omega$-linear aliphatic dicarboxylic acid having from 4 to 20 carbon atoms. In addition, the polyether polyamide (A2) is one in which a diamine constituent unit thereof is derived from a polyether diamine compound (a2-1) represented by the foregoing general formula (2) and a xylylenediamine (a-2), and a dicarboxylic acid constituent unit thereof is derived from an $\alpha,\omega$-linear aliphatic dicarboxylic acid having from 4 to 20 carbon atoms. By using the polyether polyamide (A1) or (A2), it is possible to produce a polyether polyamide composition having excellent mechanical properties such as flexibility, tensile elongation at break, etc.

(Diamine constituent unit)

The diamine constituent unit that constitutes the polyether polyamide (A1) is derived from a polyether diamine compound (a1-1) represented by the foregoing formula (1) and a xylylenediamine (a-2). In addition, the diamine constituent unit that constitutes the polyether polyamide (A2) is derived from a polyether diamine compound (a2-1) represented by the foregoing formula (2) and a xylylenediamine (a-2).

(Polyether diamine compound (a1-1))

The diamine constituent unit that constitutes the polyether polyamide (A1) contains a constituent unit derived from a polyether diamine compound (a1-1) represented by the foregoing general formula (1). In the foregoing general formula (1), (x1 + z1) is from 1 to 30, preferably from 2 to 25, more preferably from 2 to 20, and still more preferably from 2 to 15. In addition, y1 is from 1 to 50, preferably from 1 to 40, more preferably from 1 to 30, and still more preferably from 1 to 20. In the case where the values of x1, y1, and z1 are larger than the foregoing ranges, the compatibility with an oligomer or polymer composed of a xylylenediamine and a dicarboxylic acid, which is formed on the way of a reaction of melt polymerization, becomes low, so that the polymerization reaction proceeds hardly.

In addition, in the foregoing general formula (1), all of $R^1$s represent a propylene group. A structure of the oxypropylene group represented by $-OR^1-$ may be any of $-OCH_2CH_2CH_2-$, $-OCH(CH_3)CH_2-$, and $-OCH_2CH(CH_3)-$.

A number average molecular weight of the polyether diamine compound (a1-1) is preferably from 204 to 5,000, more preferably from 250 to 4,000, still more preferably from 300 to 3,000, yet still more preferably from 400 to 2,000, and even yet still more preferably from 500 to 1,800. So long as the number average molecular weight of the polyether diamine compound falls within the foregoing range, a polymer that reveals functions as an elastomer, such as flexibility, rubber elasticity, etc., can be obtained.

(Polyether diamine compound (a2-1))

The diamine constituent unit that constitutes the polyether polyamide (A2) contains a constituent unit derived from a polyether diamine compound (a2-1) represented by the foregoing general formula (2). In the foregoing general formula (2), (x2 + z2) is from 1 to 60, preferably from 2 to 40, more preferably from 2 to 30, and still more preferably from 2 to 20. In addition, y2 is from 1 to 50, preferably from 1 to 40, more preferably from 1 to 30, and still more preferably from 1 to 20. In the case where the values of x2, y2, and z2 are larger than the foregoing ranges, the compatibility with an oligomer or polymer composed of a xylylenediamine and a dicarboxylic acid, which is formed on the way of a reaction of melt polymerization, becomes low, so that the polymerization reaction proceeds hardly.

In addition, in the foregoing general formula (2), all of $R^2$s represent a propylene group. A structure of the oxypropylene group represented by $-OR^2-$ may be any of $-OCH_2CH_2CH_2-$, $-OCH(CH_3)CH_2-$, and $-OCH_2CH(CH_3)-$.

A number average molecular weight of the polyether diamine compound (a2-1) is preferably from 180 to 5,700, more preferably from 200 to 4,000, still more preferably from 300 to 3,000, yet still more preferably from 400 to 2,000, and even yet still more preferably 500 to 1,800. So long as the number average molecular weight of the polyether diamine

compound falls within the foregoing range, a polymer that reveals functions as an elastomer, such as flexibility, rubber elasticity, etc., can be obtained.

(Xylylenediamine (a-2))

The diamine constituent unit that constitutes the polyether polyamide (A1) or (A2) contains a constituent unit derived from a xylylenediamine (a-2). The xylylenediamine (a-2) is preferably m-xylylenediamine, p-xylylenediamine, or a mixture thereof, and more preferably m-xylylenediamine or a mixture of m-xylylenediamine and p-xylylenediamine.

In the case where the xylylenediamine (a-2) is derived from m-xylylenediamine, the resulting polyether polyamide is excellent in terms of flexibility, crystallinity, melt moldability, molding processability, and toughness.

In the case where the xylylenediamine (a-2) is derived from a mixture of m-xylylenediamine and p-xylylenediamine, the resulting polyether polyamide is excellent in terms of flexibility, crystallinity, melt moldability, molding processability, and toughness and furthermore, exhibits high heat resistance and high elastic modulus.

In the case where a mixture of m-xylylenediamine and p-xylylenediamine is used as the xylylenediamine (a-2), a proportion of the p-xylylenediamine relative to a total amount of m-xylylenediamine and p-xylylenediamine is preferably 90% by mole or less, more preferably from 1 to 80% by mole, and still more preferably from 5 to 70% by mole. So long as the proportion of p-xylylenediamine falls within the foregoing range, a melting point of the resulting polyether polyamide is not close to a decomposition temperature of the polyether polyamide, and hence, such is preferable.

A proportion of the constituent unit derived from the xylylenediamine (a-2) in the diamine constituent unit, namely a proportion of the xylylenediamine (a-2) relative to a total amount of the polyether diamine compound (a1-1) or (a2-1) and the xylylenediamine (a-2), both of which constitute the diamine constituent unit, is preferably from 50 to 99.8% by mole, more preferably from 50 to 99.5% by mole, and still more preferably from 50 to 99% by mole. So long as the proportion of the constituent unit derived from the xylylenediamine (a-2) in the diamine constituent unit falls within the foregoing range, the resulting polyether polyamide is excellent in terms of melt moldability and furthermore, is excellent in terms of mechanical physical properties such as strength, elastic modulus, etc.

As described previously, though the diamine constituent unit that constitutes the polyether polyamide (A1) or (A2) is derived from the polyether diamine compound (a1-1) represented by the foregoing general formula (1) and the xylylenediamine (a-2), or the polyether diamine compound (a2-1) represented by the foregoing general formula (2) and the xylylenediamine (a-2), so long as the effects of the present invention are not hindered, a constituent unit derived from other diamine compound may be contained.

As the diamine compound which may constitute a diamine constituent unit other than the polyether diamine compound (a1-1) and the xylylenediamine (a-2), and the polyether diamine compound (a2-1) and the xylylenediamine (a-2), though there can be exemplified aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, 2,4,4-trimethylhexamethylenediamine, etc.; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like, the diamine compound is not limited to these compounds.

(Dicarboxylic acid constituent unit)

The dicarboxylic acid constituent unit that constitutes the polyether polyamide (A1) or (A2) is derived from an $\alpha,\omega$-linear aliphatic dicarboxylic acid having from 4 to 20 carbon atoms. As the $\alpha,\omega$-linear aliphatic dicarboxylic acid having from 4 to 20 carbon atoms, though there can be exemplified succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like, at least one member selected from the group consisting of adipic acid and sebacic acid is preferably used from the viewpoints of crystallinity and high elasticity. These dicarboxylic acids may be used solely or in combination of two or more kinds thereof.

As described previously, though the dicarboxylic acid constituent unit that constitutes the polyether polyamide (A1) or (A2) is derived from the $\alpha,\omega$-linear aliphatic dicarboxylic acid having from 4 to 20 carbon atoms, so long as the effects of the present invention are not hindered, a constituent unit derived from other dicarboxylic acid may be contained.

As the dicarboxylic acid which may constitute the dicarboxylic acid constituent unit other than the $\alpha,\omega$-linear aliphatic dicarboxylic acid having from 4 to 20 carbon atoms, though there can be exemplified aliphatic dicarboxylic acids such as oxalic acid, malonic acid, etc.; aromatic dicarboxylic acids such as terephthalic acid, isophthalic acid, 2,6-naphthalenedicarboxylic acid, etc.; and the like, the dicarboxylic acid is not limited to these compounds.

In the case where a mixture of an $\alpha,\omega$-linear aliphatic dicarboxylic acid having from 4 to 20 carbon atoms and

isophthalic acid is used as the dicarboxylic acid component, the molding processability of the polyether polyamide (A1) or (A2) is enhanced, and a glass transition temperature increases, whereby the heat resistance can also be enhanced. A molar ratio of the α,ω-linear aliphatic dicarboxylic acid having from 4 to 20 carbon atoms and isophthalic acid (α,ω-linear aliphatic dicarboxylic acid having from 4 to 20 carbon atoms)/(isophthalic acid)) is preferably from 50/50 to 99/1, and more preferably from 70/30 to 95/5.

(Physical properties of polyether polyamides (A1) and (A2))

When the polyether polyamide (A1) or (A2) contains, as a hard segment, a highly crystalline polyamide block formed of the xylylenediamine (a-2) and the α,ω-linear aliphatic dicarboxylic acid having from 4 to 20 carbon atoms and, as a soft segment, a polyether block derived from the polyether diamine compound (a1-1) or (a2-1), it is excellent in terms of melt moldability and molding processability. Furthermore, the resulting polyether polyamide is excellent in terms of toughness, flexibility, crystallinity, heat resistance, and the like.

A relative viscosity of the polyether polyamide (A1) or (A2) is preferably in the range of from 1.1 to 3.0, more preferably in the range of from 1.1 to 2.9, and still more preferably in the range of from 1.1 to 2.8 from the viewpoints of moldability and melt mixing properties with other resins. The relative viscosity is measured by a method described in the Examples.

A melting point of the polyether polyamide (A1) is preferably in the range of from 170 to 270°C, more preferably in the range of from 175 to 270°C, and still more preferably in the range of from 180 to 270°C from the viewpoint of heat resistance. In addition, a melting point of the polyether polyamide (A2) is preferably in the range of from 170 to 270°C, more preferably in the range of from 175 to 270°C, still more preferably in the range of from 180 to 270°C, and yet still more preferably in the range of 180 to 260°C from the viewpoint of heat resistance. The melting point is measured by a method described in the Examples.

A rate of tensile elongation at break of the polyether polyamide (A1) (measurement temperature: 23°C, humidity: 50% RH) is preferably 50% or more, more preferably 100% or more, still more preferably 200% or more, yet still more preferably 250% or more, and even yet still more preferably 300% or more from the viewpoint of flexibility. In addition, a rate of tensile elongation at break of the polyether polyamide (A2) (measurement temperature: 23°C, humidity: 50% RH) is preferably 100% or more, more preferably 200% or more, still more preferably 250% or more, and yet still more preferably 300% or more from the viewpoint of flexibility.

A tensile elastic modulus of the polyether polyamide (A1) (measurement temperature: 23°C, humidity: 50% RH) is preferably 200 MPa or more, more preferably 300 MPa or more, still more preferably 400 MPa or more, yet still more preferably 500 MPa or more, and even yet still more preferably 1,000 MPa or more from the viewpoints of flexibility and mechanical strength. In addition, a tensile elastic modulus of the polyether polyamide (A2) (measurement temperature: 23°C, humidity: 50% RH) is preferably 100 MPa or more, more preferably 200 MPa or more, still more preferably 300 MPa or more, yet still more preferably 400 MPa or more, and even yet still more preferably 500 MPa or more from the viewpoints of flexibility and mechanical strength.

(Production of polyether polyamides (A1) and (A2))

The production of the polyether polyamide (A1) or (A2) is not particularly limited but can be performed by an arbitrary method under an arbitrary polymerization condition.

The polyether polyamide (A1) or (A2) can be, for example, produced by a method in which a salt composed of the diamine component (the diamine including the polyether diamine compound (a1-1) and the xylylenediamine (A-2), and the like, or the diamine including the polyether diamine compound (a2-1) and the xylylenediamine (a-2), and the like) and the dicarboxylic acid component (the dicarboxylic acid including the α,ω-linear aliphatic dicarboxylic acid having from 4 to 20 carbon atoms and the like) is subjected to temperature rise in a pressurized state in the presence of water, and polymerization is performed in a molten state while removing the added water and condensed water.

In addition, the polyether polyamide (A1) or (A2) can also be produced by a method in which the diamine component (the diamine including the polyether diamine compound (a1-1) and the xylylenediamine (a-2), and the like, or the diamine including the polyether diamine compound (a2-1) and the xylylenediamine (a-2), and the like) is added directly to the dicarboxylic acid component (the dicarboxylic acid including the α,ω-linear aliphatic dicarboxylic acid having from 4 to 20 carbon atoms and the like) in a molten state, and polycondensation is performed under atmospheric pressure. In that case, in order to keep the reaction system in a uniform liquid state, the diamine component is continuously added to the dicarboxylic acid component, and during this period, the polycondensation is advanced while subjecting the reaction system to temperature rise such that the reaction temperature does not fall below the melting point of the formed oligoamide or polyamide.

A molar ratio of the diamine component (the diamine including the polyether diamine compound (a1-1) and the xylylenediamine (a-2), and the like, or the diamine including the polyether diamine compound (a2-1) and the xylylenediamine (a-2), and the like) and the dicarboxylic acid component (the dicarboxylic acid including the α,ω-linear aliphatic dicarboxylic acid having from 4 to 20 carbon atoms and the like) ((diamine component)/(dicarboxylic acid component)) is preferably in the range of from 0.9 to 1.1, more preferably in the range of from 0.93 to 1.07, still more preferably in the range of from 0.95 to 1.05, and yet still more preferably in the range of from 0.97 to 1.02. When the molar ratio falls within the foregoing range, an increase of the molecular weight is easily advanced.

A polymerization temperature is preferably from 150 to 300°C, more preferably from 160 to 280°C, and still more preferably from 170 to 270°C. So long as the polymerization temperature falls within the foregoing range, the polymerization reaction is rapidly advanced. In addition, since the monomers or the oligomer or polymer, etc. on the way of the polymerization hardly causes thermal decomposition, properties of the resulting polymer become favorable.

A polymerization time is generally from 1 to 5 hours after starting to add dropwise the diamine component. When the polymerization time is allowed to fall within the foregoing range, the molecular weight of the polyether polyamide (A1) or (A2) can be sufficiently increased, and furthermore, coloration of the resulting polymer can be suppressed.

In addition, the polyether polyamide (A1) or (A2) may also be produced by previously charging the polyether diamine compound (a1-1) or (a2-1) as the diamine component in a reaction tank together with the dicarboxylic acid component and heating them to form a molten mixture [Step (1)]; and adding to the resulting molten mixture the diamine component other than the above-described polyether diamine compound (a1-1) or (a2-1), including the xylylenediamine (a-2) and the like [Step (2)].

By previously charging the polyether diamine compound (a1-1) or (a2-1) in a reaction tank, the heat deterioration of the polyether diamine compound (a1-1) or (a2-1) can be suppressed. In that case, in order to keep the reaction system in a uniform liquid state, the diamine component other than the polyether diamine compound (a1-1) or (a2-1) is continuously added to the molten mixture, and during that period, the polycondensation is advanced while subjecting the reaction system to temperature rise such that the reaction temperature does not fall below the melting point of the formed oligoamide or polyamide.

Here, while the above-described [Step (1)] and [Step (2)] are described, in the description, each of the polyether polyamides (A1) and (A2) may be sometimes referred to as "polyether polyamide (A)", and each of the polyether diamine compounds (a1-1) and (a2-1) maybe sometimes referred to as "polyether diamine compound (a-1)".

[Step (1)]

Step (1) is a step of mixing the above-described polyether diamine compound (a-1) and the above-described α,ω-linear aliphatic dicarboxylic acid and heating them to form a molten mixture.

By going through Step (1), the resulting polyether polyamide is less in odor and coloration, and a resin having a more excellent rate of tensile elongation at break can be formed. It may be presumed that this is caused due to the fact that by going through Step (1), the polyether diamine compound (a-1) and the α,ω-linear aliphatic dicarboxylic acid compound are uniformly melted and mixed, and therefore, in a synthesis process of a polyether polyamide, before the temperature in the reaction vessel reaches a temperature at which the decomposition of the polyether diamine compound (a-1) proceeds, the polyether diamine compound (a-1) is (poly)condensed with the α,ω-linear aliphatic dicarboxylic acid compound and stabilized. That is, it may be considered that by going through Step (1), in the synthesis process of a polyether polyamide, deterioration of the polyether diamine compound (a-1) by thermal history or the like is prevented and efficiently incorporated into the polyether polyamide, and as a result, a decomposition product derived from the polyether diamine compound (a-1) is hardly formed.

It is possible to perform evaluation on what degree of the polyether diamine compound (a-1) is stabilized in the reaction system, by determining an incorporation rate. The incorporation rate is also dependent upon the kind of the α,ω-linear aliphatic dicarboxylic acid compound, and the more increased the carbon number of the straight chain of the α,ω-linear aliphatic dicarboxylic acid compound, the higher the incorporation rate of the polyether diamine compound (a-1) is; however, by going through Step (1), the incorporation rate becomes higher.

The incorporation rate of the above-described polyether diamine compound (a-1) can be determined by the following method.

(1) 0.2 g of the resulting polyether polyamide (A) is dissolved in 2 mL of hexafluoroisopropanol (HFIP).
(2) The solution obtained in (1) is added dropwise to 100 mL of methanol to perform reprecipitation.
(3) A reprecipitate obtained in (2) is filtered with a membrane filter having an opening of 10 $\mu$m.
(4) A residue on the filter as obtained in (3) is dissolved in heavy HFIP (manufactured by Sigma-Aldrich) and analyzed by means of $^1$H-NMR (AV400M, manufactured by Bruker BioSpin K.K.), and a copolymerization rate (a) between the polyether diamine compound (a-1) and the xylylenediamine (a-2) of the residue on the filter is calculated. The copolymerization ratio is calculated from a ratio of a spectral peak area assigned to the xylylenediamine (a-2) and a spectral peak area assigned to the polyether diamine compound (a-1).
(5) The incorporation rate of the polyether diamine compound (a-1) is calculated according to the following equation.

$$\text{Incorporation rate of polyester diamine compound (a-1)} = a/b \times 100\ (\%)$$

a: Copolymerization ratio of the constituent unit derived from the polyether diamine compound (a-1) of the residue on the filter relative to all of the diamine constituent units, as calculated in (4)
b: Copolymerization ratio of the constituent unit derived from the polyether diamine compound (a-1) relative to all of the diamine constituent units, as calculated from the charge amount at the time of polymerization

First of all, in Step (1), the polyether diamine compound (a-1) and the α,ω-linear aliphatic dicarboxylic acid compound are previously charged in a reaction vessel, and the polyether diamine compound (a-1) in a molten state and the α,ω-linear aliphatic dicarboxylic acid compound in a molten state are mixed.
In order to render both the polyether diamine compound (a-1) and the α,ω-linear aliphatic dicarboxylic acid compound in a molten state,

(i) The solid α,ω-linear aliphatic dicarboxylic acid compound and the liquid or solid polyether diamine compound (a-1) may be charged in a reaction vessel and then melted by heating to the melting point of the α,ω-linear aliphatic dicarboxylic acid compound or higher;
(ii) The melted α,ω-linear aliphatic dicarboxylic acid compound may be charged in a reaction vessel having the liquid or solid polyether diamine compound (a-1) charged therein;
(iii) The liquid or solid polyether diamine compound (a-1) may be charged in a reaction vessel having the α,ω-linear aliphatic dicarboxylic acid compound in a molten state charged therein; or
(iv) A mixture prepared by previously mixing the melted polyether diamine compound (a-1) and the melted α,ω-linear aliphatic dicarboxylic acid compound may be charged in a reaction vessel.

In the foregoing (i) to (iv), on the occasion of charging the polyether diamine compound (a-1) and/or the α,ω-linear aliphatic dicarboxylic acid compound in a reaction vessel, the compound or compounds may be dissolved or dispersed in an appropriate solvent. On that occasion, examples of the solvent include water and the like.
In addition, from the viewpoint of producing a polyether polyamide with less coloration, in charging the polyether diamine compound (a-1) and the α,ω-linear aliphatic dicarboxylic acid compound in a reaction vessel, it is preferable to thoroughly purge the inside of the reaction vessel with an inert gas.
In the case of the foregoing (i), it is preferable to purge the inside of the reaction vessel with an inert gas before melting; in the case of the foregoing (ii) or (iii), it is preferable to purge the inside of the reaction vessel with an inert gas before charging the melted α,ω-linear aliphatic dicarboxylic acid compound; and in the case of the foregoing (iv), it is preferable to purge the inside of the reaction vessel with an inert gas before charging the above-described mixture.
Subsequently, in Step (1), the above-described mixture of the polyether diamine compound (a-1) in a molten state and the α,ω-linear aliphatic dicarboxylic acid compound in a molten state is heated.
A heating temperature on the occasion of heating the above-described mixture is preferably the melting point of the α,ω-linear aliphatic dicarboxylic acid compound or higher; more preferably in the range of from the melting point of the α,ω-linear aliphatic dicarboxylic acid compound to (the melting point + 40°C); and still more preferably in the range of from the melting point of the α,ω-linear aliphatic dicarboxylic acid compound to (the melting point + 30°C).
In addition, the heating temperature at the time of finishing Step (1) is preferably from the melting point of the α,ω-linear aliphatic dicarboxylic acid compound to (the melting point + 50°C). When the heating temperature is the melting point of the α, ω-linear aliphatic dicarboxylic acid compound or higher, the mixed state of the polyether diamine compound (a-1) and the α,ω-linear aliphatic dicarboxylic acid compound becomes uniform, so that the effects of the present invention can be sufficiently revealed. In addition, when the heating temperature is not higher than (the melting point of α,ω-linear aliphatic dicarboxylic acid compound + 50°C), there is no concern that the thermal decomposition of the polyether diamine compound (a-1) and the α,ω-linear aliphatic dicarboxylic acid compound proceeds.
Incidentally, the melting point of the α,ω-linear aliphatic dicarboxylic acid compound can be measured by means of differential scanning calorimetry (DSC) or the like.
A heating time in Step (1) is generally from about 15 to 120 minutes. By allowing the heating time to fall within the foregoing range, the mixed state of the polyether diamine compound (a-1) and the α,ω-linear aliphatic dicarboxylic acid compound can be made thoroughly uniform, and there is no concern that the thermal decomposition proceeds.
In Step (1), the molten mixture in which the polyether diamine compound (a-1) in a molten state and the α,ω-linear aliphatic dicarboxylic acid compound in a molten state are uniformly mixed as described above is obtained. In addition, meanwhile, in Step (1), it is preferable that from 30 to 100% by mole of an amino group in the whole of the charged polyether diamine compound (a-1) is (poly)condensed with the α,ω-linear aliphatic dicarboxylic acid compound to form an oligomer or polymer. From this fact, the above-described molten mixture obtained in Step (1) may further

contain the above-described melted oligomer or polymer.

In Step (1), a degree of (poly)condensation between the polyether diamine compound (a-1) and the α,ω-linear aliphatic dicarboxylic acid compound as described above varies with a combination of the polyether diamine compound (a-1) and the α,ω-linear aliphatic dicarboxylic acid compound, a mixing ratio thereof, a temperature of the reaction vessel on the occasion of mixing, or a mixing time; however, before Step (2) of adding the diamine component other than the polyether diamine compound (a-1), it is preferable that 30% by mole or more of the amino group of the whole of the charged polyether diamine compound (a-1) is (poly)condensed with the α,ω-linear aliphatic dicarboxylic acid compound, it is more preferable that 50% by mole or more of the amino group of the whole of the charged polyether diamine compound (a-1) is (poly)condensed with the α,ω-linear aliphatic dicarboxylic acid compound, and it is still more preferable that 70% by mole or more of the amino group of the whole of the charged polyether diamine compound (a-1) is (poly)condensed with the α,ω-linear aliphatic dicarboxylic acid compound.

A rate of reaction of the amino group of the whole of the polyether diamine compound can be calculated according to the following equation. Rate of reaction of amino group = (1 - [$NH_2$ in Step (1)]/[$NH_2$ in (a-1)]) × 100 [$NH_2$ in (a-1)]: Terminal amino group concentration calculated on the occasion of assuming that the whole of the polyether diamine compound (a-1) and the α,ω-linear aliphatic dicarboxylic acid compound as charged are in an uncreated state [$NH_2$ in Step (1)]: Terminal amino group concentration of the mixture in Step (1)

In addition, in Step (1), on the occasion of charging the polyether diamine compound (a-1) and the α,ω-linear aliphatic dicarboxylic acid compound in the reaction vessel, a phosphorus atom-containing compound and an alkali metal compound as described later may be added.

[Step (2)]

Step (2) is a step of adding a diamine component other than the above-described polyether diamine compound (a-1), including the xylylene diamine (a-2) and the like (hereinafter sometimes abbreviated as "xylylenediamine (a-2), etc.") to the molten mixture obtained in Step (1).

In Step (2), a temperature in the reaction vessel on the occasion of adding the xylylenediamine (a-2), etc. is preferably a temperature of the melting point of the formed polyether amide oligomer or higher and up to (the melting point + 30°C). When the temperature in the reaction vessel on the occasion of adding the xylylenediamine (a-2), etc. is a temperature of the melting point of the polyether amide oligomer composed of the molten mixture of the polyether diamine compound (a-1) and the α,ω-linear aliphatic dicarboxylic acid compound and the xylylenediamine (a-2), etc. or higher and up to (the melting point + 30°C), there is no possibility that the reaction mixture is solidified in the reaction vessel, and there is less possibility that the reaction mixture is deteriorated, and hence, such is preferable.

Though the above-described addition method is not particularly limited, it is preferable to continuously add dropwise the xylylenediamine (a-2), etc. while controlling the temperature in the reaction vessel within the foregoing temperature range, and it is more preferable to continuously raise the temperature in the reaction vessel with an increase of the amount of dropwise addition of the xylylenediamine (a-2), etc.

In addition, it is preferable that at a point of time of completion of addition of the whole amount of the diamine component including the xylylenediamine (a-2), etc., the temperature in the reaction vessel is from the melting point of the produced polyether polyamide to (the melting point + 30°C). When at a point of time of completion of addition of the xylylenediamine (a-2), etc., the temperature in the reaction vessel is a temperature of the melting point of the resulting polyether amide (A) or higher and up to (the melting point + 30°C), there is no possibility that the reaction mixture is solidified in the reaction vessel, and there is less possibility that the reaction mixture is deteriorated, and hence, such is preferable.

Incidentally, the melting point of the polyether amide oligomer or polyether polyamide as referred to herein can be confirmed by means of DSC or the like with respect to a material obtained by previously mixing the polyether diamine compound (a-1), the xylylenediamine (a-2), etc., and the dicarboxylic acid compound in a prescribed molar ratio and melting and mixing them in a nitrogen gas stream for at least about one hour under a heating condition to such an extent that the mixture is melted.

During this period, it is preferable that the inside of the reaction vessel is purged with nitrogen. In addition, during this period, it is preferable that the system in the reaction vessel is mixed using a stirring blade, thereby rendering the inside of the reaction vessel in a uniform fluidized state.

An addition rate of the xylylenediamine (a-2), etc. is chosen in such a manner that the reaction system is held in a uniform molten state while taking into consideration heat of formation of an amidation reaction, a quantity of heat to be consumed for distillation of condensation formed water, a quantity of heat to be fed into the reaction mixture from a heating medium through a reaction vessel wall, a structure of a portion at which the condensation formed water and the raw material compounds are separated from each other, and the like.

Though a time required for addition of the xylylenediamine (a-2), etc. varies with a scale of the reaction vessel, it is generally in the range of from 0.5 to 5 hours, and more preferably in the range of from 1 to 3 hours. When the time

falls within the foregoing range, not only the solidification of the polyether amide oligomer and the polyether polyamide (A) formed in the reaction vessel can be suppressed, but the coloration due to thermal history of the reaction system can be suppressed.

During addition of the xylylenediamine (a-2), etc., condensed water formed with the progress of reaction is distilled out of the reaction system. Incidentally, the raw materials such as the scattered diamine compound and dicarboxylic acid compound, etc. are separated from condensed water and returned into the reaction vessel; and in this respect, it is possible to control an amount thereof, and the amount can be controlled by, for example, controlling a temperature of a reflux column to an optimum range or controlling a filler of a packing column, such as so-called Raschig ring, Lessing ring, saddle, etc. to appropriate shape and filling amount. For separation of the raw materials from condensed water, a partial condenser is suitable, and it is preferable to distill off condensed water through a total condenser.

In the above-described Step (2), a pressure in the inside of the reaction vessel is preferably from 0.1 to 0.6 MPa, and more preferably from 0.15 to 0.5 MPa. When the pressure in the inside of the reaction vessel is 0.1 MPa or more, scattering of the unreacted xylylenediamine (a-2), etc. and dicarboxylic acid compound outside the system together with condensed water can be suppressed. For the purpose of preventing scattering of the unreacted xylylenediamine (a-2), etc. and dicarboxylic acid compound outside the system, the scattering can be suppressed by increasing the pressure in the inside of the reaction vessel; however, it can be thoroughly suppressed at a pressure of 0.6 MPa or less. When the pressure in the reaction vessel is more than 0.6 MPa, more energy is required for distilling condensed water outside the reaction system because, for example, there is a concern that the boiling point of the condense water becomes high, so that it is necessary to allow a high-temperature heating medium to pass by a partial condenser, and hence, such is not preferable.

In the case of applying a pressure, it may be performed by using an inert gas such as nitrogen, etc., or it may be performed by using a steam of condensed water formed during the reaction. In the case where the pressure has been applied, after completion of addition of the xylylenediamine (a-2), etc., the pressure is reduced until it reaches atmospheric pressure.

[Step (3)]

After completion of Step (2), though the polycondensation reaction may be finished, Step (3) of further continuing the polycondensation reaction may be performed at atmospheric pressure or negative pressure for a fixed period of time.

In the case of further continuing the polycondensation reaction at negative pressure, it is preferable to perform pressure reduction such that the pressure of the reaction system is finally 0.08 MPa or less. Though the time of from completion of addition of the xylylenediamine (a-2), etc. to start of the pressure reduction is not particularly limited, it is preferable to start the pressure reduction within 30 minutes after completion of addition. As for a pressure reduction rate, a rate such that the unreacted xylylenediamine (a-2), etc. is not distilled outside the system together with water during the pressure reduction is chosen, and for example, it is chosen from the range of from 0.1 to 1 MPa/hr. When the pressure reduction rate is made slow, not only a time required for the production increases, but a lot of time is required for the pressure reduction, so that there is a concern that heat deterioration of the resulting polyether polyamide (A) is caused; and hence, such is not preferable.

A temperature of the reaction vessel in Step (3) is preferably a temperature at which the resulting polyether polyamide (A) is not solidified, namely a temperature in the range of from the melting point of the resulting polyether polyamide (A) to (the melting point + 30°C). Incidentally, the melting point of the polyether polyamide as referred to herein can be confirmed by means of DSC or the like.

A polycondensation reaction time in Step (3) is generally 120 minutes or less. When the polymerization time is allowed to fall within the foregoing range, the molecular weight of the polyether polyamides (A) can be sufficiently increased, and furthermore, coloration of the resulting polymer can be suppressed.

After completion of the polycondensation reaction, a method of taking out the polyether polyamide (A) from the reaction vessel is not particularly limited, and a known technique can be adopted; however, from the viewpoints of productivity and sequent handling properties, a technique in which while extracting a strand through a strand die heated at a temperature of from the melting point of the polyether polyamide (A) to (the melting point + 50°C), the strand of the molten resin is cooled in a water tank and then cut by a pelletizer to obtain pellets, or so-called hot cutting or underwater cutting, or the like is preferable. On that occasion, for the purpose of increasing or stabilizing a discharge rate of the polyester polyamide (A) from the strand die, or the like, the inside of the reaction vessel may be pressurized. In the case of pressurization, in order to suppress deterioration of the polyether polyamide (A), it is preferable to use an inert gas.

It is preferable that the polyether polyamide (A1) or (A2) is produced by a melt polycondensation (melt polymerization) method by addition of a phosphorus atom-containing compound. The melt polycondensation method is preferably a method in which the diamine component is added dropwise to the dicarboxylic acid component having been melted at atmospheric pressure, and the mixture is polymerized in a molten state while removing condensed water.

In the polycondensation system of the polyether polyamide (A1) or (A2), a phosphorus atom-containing compound can be added within the range where properties thereof are not hindered. Examples of the phosphorus atom-containing compound which can be added include dimethylphosphinic acid, phenylmethylphosphinic acid, hypophosphorous acid, sodium hypophosphite, potassium hypophosphite, lithium hypophosphite, ethyl hypophosphite, phenylphosphonous acid, sodium phenylphosphonoate, potassium phenylphosphonoate, lithium phenylphosphonoate, ethyl phenylphosphonoate, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, pyrrophosphorous acid, and the like; and of these, in particular, hypophosphorous acid metal salts such as sodium hypophosphite, potassium hypophosphite, lithium hypophosphite, etc. are preferably used because they are high in terms of an effect for promoting the amidation reaction and also excellent in terms of a coloration preventing effect, with sodium hypophosphite being especially preferable. The phosphorus atom-containing compound which can be used in the present invention is not limited to these compounds. The addition amount of the phosphorus atom-containing compound which is added in the polycondensation system is preferably from 1 to 1,000 ppm, more preferably from 5 to 1,000 ppm, and still more preferably from 10 to 1,000 ppm as converted into a phosphorus atom concentration in the polyether polyamide (A1) or (A2) from the viewpoints of favorable appearance and molding processability.

In addition, it is preferable to add an alkali metal compound in combination with the phosphorus atom-containing compound in the polycondensation system of the polyether polyamide (A1) or (A2). In order to prevent the coloration of the polymer during the polycondensation, it is necessary to allow a sufficient amount of the phosphorus atom-containing compound to exist; however, under certain circumstances, there is a concern that gelation of the polymer is caused, and therefore, in order to also adjust an amidation reaction rate, it is preferable to allow an alkali metal compound to coexist. As the alkali metal compound, alkali metal hydroxides and alkali metal acetates are preferable. Examples of the alkali metal compound which can be used in the present invention include lithium hydroxide, sodium hydroxide, potassium hydroxide, rubidium hydroxide, cesium hydroxide, lithium acetate, sodium acetate, potassium acetate, rubidium acetate, cesium acetate, and the like; however, the alkali metal compound can be used without being limited to these compounds. In the case of adding the alkali metal compound in the polycondensation system, a value obtained by dividing the molar number of the compound by the molar number of the phosphorus atom-containing compound is regulated to preferably from 0.5 to 1, more preferably from 0.55 to 0.95, and still more preferably from 0.6 to 0.9. When the subject value falls within the foregoing range, an effect for suppressing the promotion of the amidation reaction of the phosphorus atom-containing compound is appropriate; and therefore, the occurrence of the matter that the polycondensation reaction rate is lowered due to excessive suppression of the reaction, so that thermal history of the polymer increases, thereby causing an increase of gelation of the polymer can be avoided.

A sulfur atom concentration of the polyether polyamide (A1) or (A2) is preferably from 1 to 200 ppm, more preferably from 10 to 150 ppm, and still more preferably from 20 to 100 ppm. When the sulfur atom concentration falls within the foregoing range, not only an increase of yellowness (YI value) of the polyether polyamide at the time of production can be suppressed, but an increase of the YI value on the occasion of melt molding the polyether polyamide can be suppressed, thereby making it possible to suppress the YI value of the resulting molded article at a low level.

Furthermore, in the case of using sebacic acid as the dicarboxylic acid, its sulfur atom concentration is preferably from 1 to 500 ppm, more preferably from 1 to 200 ppm, still more preferably from 10 to 150 ppm, and especially preferably from 20 to 100 ppm. When the sulfur atom concentration falls within the foregoing range, an increase of the YI value on the occasion of polymerizing the polyether polyamide can be suppressed. In addition, an increase of the YI value on the occasion of melt molding the polyether polyamide can be suppressed, thereby making it possible to suppress the YI value of the resulting molded article at a low level.

Similarly, in the case of using sebacic acid as the dicarboxylic acid, its sodium atom concentration is preferably from 1 to 500 ppm, more preferably from 10 to 300 ppm, and still more preferably from 20 to 200 ppm. When the sodium atom concentration falls within the foregoing range, the reactivity on the occasion of synthesizing the polyether polyamide is good, the molecular weight can be easily controlled to an appropriate range, and furthermore, the use amount of the alkali metal compound which is blended for the purpose of adjusting the amidation reaction rate as described above can be made small. In addition, an increase of the viscosity on the occasion of melt molding the polyether polyamide can be suppressed, and not only the moldability becomes favorable, but the generation of scorch at the time of molding processing can be suppressed, and therefore, the quality of the resulting molded article tends to become favorable.

Such sebacic acid is preferably plant-derived sebacic acid. In view of the fact that the plant-derived sebacic acid contains sulfur compounds or sodium compounds as impurities, the polyether polyamide containing, as a constituent unit, a unit derived from plant-derived sebacic acid is low in terms of the YI value even when an antioxidant is not added, and the YI value of the resulting molded article is also low. In addition, it is preferable to use the plant-derived sebacic acid without excessively purifying the impurities. Since it is not necessary to excessively purify the impurities, such is advantageous from the standpoint of costs, too.

In the case of the plant-derived sebacic acid, its purity is preferably from 99 to 100% by mass, more preferably from 99.5 to 100% by mass, and still more preferably from 99.6 to 100% by mass. When the purity of the plant-derived

sebacic acid falls within this range, the quality of the resulting polyether polyamide is good, so that the polymerization is not affected, and hence, such is preferable.

For example, an amount of other dicarboxylic acid (e.g., 1,10-decamethylenedicarboxylic acid, etc.) which is contained in the sebacic acid is preferably from 0 to 1% by mass, more preferably from 0 to 0.7% by mass, and still more preferably from 0 to 0.6% by mass. When the amount of the other dicarboxylic acid falls within this range, the quality of the resulting polyether polyamide is good, so that the polymerization is not affected, and hence, such is preferable.

In addition, an amount of a monocarboxylic acid (e.g., octanoic acid, nonanoic acid, undecanoic acid, etc.) which is contained in the sebacic acid is preferably from 0 to 1% by mass, more preferably from 0 to 0.5% by mass, and still more preferably from 0 to 0.4% by mass. When the amount of the monocarboxylic acid falls within this range, the quality of the resulting polyether polyamide is good, so that the polymerization is not affected, and hence, such is preferable.

A hue (APHA) of the sebacic acid is preferably 100 or less, more preferably 75 or less, and still more preferably 50 or less. When the hue of the sebacic acid falls within this range, the YI value of the resulting polyether polyamide is low, and hence, such is preferable. Incidentally, the APHA can be measured in conformity with the Standard Methods for the Analysis of Fats, Oils and Related Materials by the Japan Oil Chemists' Society.

The polyether polyamide (A1) or (A2) obtained by the melt polycondensation is once taken out, pelletized, and then dried for use. In addition, for the purpose of further increasing the degree of polymerization, solid phase polymerization may also be performed. As a heating apparatus which is used for drying or solid phase polymerization, a continuous heat drying apparatus, a rotary drum type heating apparatus called, for example, a tumble dryer, a conical dryer, a rotary dryer, etc., or a cone type heating apparatus equipped with a rotary blade in the inside thereof, called a Nauta mixer, can be suitably used. However, the method and the apparatus are not limited to these, and a known method and apparatus may be used.

<Stabilizer (B)>

From the viewpoint of enhancing heat stability and heat aging resistance, the stabilizer (B) which is used in the present invention is preferably at least one member selected from the group consisting of an amine compound (B1), an organic sulfur compound (B2), a phenol compound (B3), a phosphorus compound (B4), and an inorganic compound (B5). Furthermore, from the viewpoint of enhancing processing stability, heat stability, and heat aging resistance at the time of melt molding as well as the viewpoint of appearance of the molded article, particularly prevention of coloration, at least one member selected from the group consisting of an amine compound (B1), an organic sulfur compound (B2), and an inorganic compound (B5) is especially preferable.

(Amine compound (B1))

As the amine compound (B1), an aromatic secondary amine compound is preferable; a compound having a diphenylamine skeleton, a compound having a phenylnaphthylamine skeleton, and a compound having a dinaphthylamine skeleton are more preferable; and a compound having a diphenylamine skeleton and a compound having a phenylnaphthylamine skeleton are still more preferable.

Specifically, compounds having a diphenylamine skeleton, such as a p,p'-dialkyldiphenylamine (carbon number of the alkyl group: 8 to 14), octylated diphenylamine (available as, for example, a trade name: IRGANOX 5057, manufactured by BASF SE and a trade name: NOCRAC AD-F, manufactured by Ouchi Shinko Chemical Industrial Co., Ltd.), 4,4'-bis($\alpha$,$\alpha$-dimethylbenzyl)diphenylamine (available as, for example, a trade name: NOCRAC CD, manufactured by Ouchi Shinko Chemical Industrial Co., Ltd.), p-(p-toluenesulfonylamide)diphenylamine (available as, for example, a trade name: NOCRAC TD, manufactured by Ouchi Shinko Chemical Industrial Co., Ltd.), N,N'-diphenyl-p-phenylenediamine (available as, for example, a trade name: NOCRAC DP, manufactured by Ouchi Shinko Chemical Industrial Co., Ltd.), N-phenyl-N'-isopropyl-p-phenylenediamine (available as, for example, a trade name: NOCRAC 810-NA, manufactured by Ouchi Shinko Chemical Industrial Co., Ltd.), N-phenyl-N'-(1,3-dimethylbutyl)-p-phenylenediamine (available as, for example, a trade name: NOCRAC 6C, manufactured by Ouchi Shinko Chemical Industrial Co., Ltd.), N-phenyl-N'-(3-methacryloyloxy-2-hydroxypropyl)-p-phenylenediamine (available as, for example, a trade name: NOCRAC G-1, manufactured by Ouchi Shinko Chemical Industrial Co., Ltd.), etc.; compounds having a phenylnaphthylamine skeleton, such as N-phenyl-1-naphthylamine (available as, for example, a trade name: NOCRAC PA, manufactured by Ouchi Shinko Chemical Industrial Co., Ltd.), N,N'-di-2-naphthyl-p-phenylenediamine (available as, for example, a trade name: NOCRAC White, manufactured by Ouchi Shinko Chemical Industrial Co., Ltd.), etc.; compounds having a dinaphthylamine skeleton, such as 2,2'-dinaphthylamine, 1,2'-dinaphthylamine, 1,1'-dinaphthylamine, etc.; and mixtures thereof can be exemplified; however, the amine compound is not limited to these compounds.

Of these, 4,4'-bis($\alpha$,$\alpha$-dimethylbenzyl)diphenylamine, N,N'-di-2-naphthyl-p-phenylenediamine, and N,N'-diphenyl-p-phenylenediamine are preferable, and N,N'-di-2-naphthyl-p-phenylenediamine and 4,4'-bis(α,α-dimethylbenzyl)diphenylamine are especially preferable.

(Organic sulfur compound (B2))

As the organic sulfur compound (B2), a mercapto benzimidazole compound, a dithiocarbamic acid compound, a thiourea compound, and an organic thioic acid compound are preferable, and a mercapto benzimidazole compound and an organic thioic acid compound are more preferable.

Specifically, mercapto benzimidazole compounds such as 2-mercapto benzimidazole (available as, for example, a trade name: NOCRAC MB, manufactured by Ouchi Shinko Chemical Industrial Co., Ltd.), 2-mercapto methylbenzimidazole (available as, for example, a trade name: NOCRAC MB, manufactured by Ouchi Shinko Chemical Industrial Co., Ltd.), a metal salt of 2-mercapto benzimidazole, etc.; organic thioic acid compounds such as dilauryl 3,3'-thiodipropionate (available as, for example, a trade name: DLTP "Yoshitomi", manufactured by API Corporation and a trade name: SUMILIZER TPL-R, manufactured by Sumitomo Chemical Co., Ltd.), dimyristyl 3,3'-thiodipropionate (available as, for example, a trade name: DMTP "Yoshitomi", manufactured by API Corporation and a trade name: SUMILIZER TPM, manufactured by Sumitomo Chemical Co., Ltd.), distearyl 3,3'-thiodipropionate (available as, for example, a trade name: DSTP "Yoshitomi", manufactured by API Corporation and a trade name: SUMILIZER TPS, manufactured by Sumitomo Chemical Co., Ltd.), pentaerythritol tetrakis(3-lauryl thiopropionate) (available as, for example, a trade name: SUMILIZER TP-D, manufactured by Sumitomo Chemical Co., Ltd.), etc.; dithiocarbamic acid compounds such as a metal salt of diethyldithiocarbamic acid, a metal salt of dibutyldithiocarbamic acid, etc.; thiourea compounds such as 1,3-bis(dimethylaminopropyl)-2-thiourea (available as, for example, a trade name: NOCRAC NS-10-N, manufactured by Ouchi Shinko Chemical Industrial Co., Ltd.), tributylthiourea, etc.; and mixtures thereof can be exemplified; however, the organic sulfur compound is not limited to these compounds.

Of these, 2-mercapto benzimidazole, 2-mercapto methylbenzimidazole, dimyristyl 3,3'-thiodipropionate, distearyl 3,3'-thiodipropionate, and pentaerythritol tetrakis(3-lauryl thiopropionate) are preferable; pentaerythritol tetrakis(3-lauryl thiopropionate), 2-mercapto benzimidazole, and dimyristyl 3,3'-thiodipropionate are more preferable; and pentaerythritol tetrakis(3-lauryl thiopropionate) is especially preferable.

A molecular weight of the organic sulfur compound (B2) is generally 200 or more, and preferably 500 or more, and an upper limit thereof is generally 3,000.

It is preferable to use the amine compound (B1) in combination with the organic sulfur compound (B2). By using these compounds in combination, the heat aging resistance of the polyether polyamide composition tends to become favorable as compared with the case of sole use of such a compound.

Examples of a suitable combination of the amine compound (B1) with the organic sulfur compound (B2) include a combination of at least one amine compound (B1) selected from 4,4'-bis(α,α-dimethylbenzyl)diphenylamine and N,N'-di-2-naphthyl-p-phenylenediamine with at least one organic sulfur compound (B2) selected from dimyristyl 3,3'-thiodipropionate, 2-mercapto methylbenzimidazole, and pentaerythritol tetrakis(3-lauryl thiopropionate). Furthermore, a combination in which the amine compound (B1) is N,N'-di-2-naphthyl-p-phenylenediamine, and the organic sulfur compound (B2) is pentaerythritol tetrakis(3-lauryl thiopropionate) is more preferable.

In addition, in the case of using the amine compound (B1) and the organic sulfur compound (B2) in combination, a ratio of the amine compound (B1) to the organic sulfur compound (B2) is preferably from 0.05 to 15, more preferably from 0.1 to 5, and still more preferably from 0.2 to 2 in terms of a content ratio (mass ratio) in the polyether polyamide composition of the present invention.

(Phenol compound (B3))

As the phenol compound (B3), for example, 2,2'-methylene bis(4-methyl-6-t-butylphenol) (available as, for example, a trade name: YOSHINOX 425, manufactured by API Corporation), 4,4'-butylidene bis(6-t-butyl-3-methylphenol) (available as, for example, a trade name: ADEKA STAB AO-40, manufactured by Adeka Corporation and a trade name: SUMILIZER BBM-S, manufactured by Sumitomo Chemical Co., Ltd.), 4,4'-thiobis(6-t-butyl-3-methylphenol) (available as, for example, a trade name: ANTAGE CRYSTAL, manufactured by Kawaguchi Chemical Industry Co., Ltd.), 3,9-bis[2-[3-(3-t-butyl-4-hydroxy-5-methylphenyl)propionyloxy]-1,1-dimethylethyl]-2,4,8,10-tetraoxaspiro[5.5]undecane (available as, for example, a trade name: SUMILIZER GA-80, manufactured by Sumitomo Chemical Co., Ltd. and a trade name: ADEKA STAB AO-80, manufactured by Adeka Corporation), triethylene glycol bis[3-(3-t-butyl-5-methyl-4-hydroxyphenyl)propionate (available as, for example, a trade name: IRGANOX (R)245, manufactured by BASF SE), 1,6-hexanediol bis[3-(3,5-di-t-butyl-4-hydroxyphenyl)propionate] (available as, for example, a trade name: IRGANOX 259, manufactured by BASF SE), 2,4-bis(n-octylthio)-6-(4-hydroxy-3,5-di-t-butylanilino)-1,3,5-triazine (available as, for example, a trade name: IRGANOX 565, manufactured by BASF SE), pentaerythritol tetrakis[3-(3,5-di-t-butyl-4-hydroxyphenyl)propionate] (available as, for example, a trade name: IRGANOX 1010, manufactured by BASF SE and a trade

name: ADEKA STAB AO-60, manufactured by Adeka Corporation), 2,2-thiodiethylene bis[3-(3,5-di-t-butyl-4-hydroxyphenyl)propionate] (available as, for example, a trade name: IRGANOX 1035, manufactured by BASF SE), octadecyl 3-(3,5-di-t-butyl-4-hydroxyphenyl)propionate (available as, for example, a trade name: IRGANOX 1076, manufactured by BASF SE and a trade name: ADEKA STAB AO-50, manufactured by Adeka Corporation), N,N'-hexamethylene bis(3,5-di-t-butyl-4-hydroxy-hydrocinnamide) (available as, for example, a trade name: IRGANOX 1098, manufactured by BASF SE), diethyl 3,5-di-t-butyl-4-hydroxybenzylphosphonate (available as, for example, a trade name: IRGANOX 1222, manufactured by BASF SE), 1,3,5-trimethyl-2,4,6-tris(3,5-di-t-butyl-4-hydroxybenzyl)benzene (available as, for example, a trade name: IRGANOX 1330, manufactured by BASF SE), tris(3,5-di-t-butyl-4-hydroxybenzyl) isocyanurate (available as, for example, a trade name: IRGANOX 3114, manufactured by BASF SE and a trade name: ADEKA STAB AO-20, manufactured by Adeka Corporation), 2,4-bis[(octylthio)methyl]-o-cresol (available as, for example, a trade name: IRGANOX 1520, manufactured by BASF SE), isooctyl 3-(3,5-di-t-butyl-4-hydroxyphenyl)propionate (available as, for example, a trade name: IRGANOX 1135, manufactured by BASF SE), and the like can be exemplified; however, the phenol compound is not limited to these compounds.

Of these, octadecyl 3-(3,5-di-t-butyl-4-hydroxyphenyl)propionate, 1,6-hexanediol bis[3-(3,5-di-t-butyl-4-hydroxyphenyl)propionate], pentaerythritol tetrakis[3-(3,5-di-t-butyl-4-hydroxyphenyl)propionate], N,N'-hexamethylene bis(3,5-di-t-butyl-4-hydroxy-hydrocinnamide), 3,9-bis[2-[3-(3-t-butyl-4-hydroxy-5-methylphenyl)propionyloxy]-1,1-dimethylethyl]-2,4,8,10-tetraoxaspiro[5.5]undecane, and a hindered phenol compound of N,N'-hexamethylene bis(3,5-di-t-butyl-4-hydroxy-hydrocinnamide) are preferable.

(Phosphorus compound (B4))

As the phosphorus compound (B4), a phosphite compound and a phosphonite compound are preferable.

As the phosphite compound, for example, distearyl pentaerythritol diphosphite (available as, for example, a trade name: ADEKA STAB PEP-8, manufactured by Adeka Corporation and a trade name: JPP-2000, manufactured by Johoku Chemical Co., Ltd.), dinonylphenyl pentaerythritol diphosphite (available as, for example, a trade name: ADEKA STAB PEP-4C, manufactured by Adeka Corporation), bis(2,4-di-t-butylphenyl)pentaerythritol diphosphite (available as, for example, a trade name: IRGAFOS 126, manufactured by BASF SE and a trade name: ADEKA PEP-24G, manufactured by Adeka Corporation), bis(2,6-di-t-butyl-4-methylphenyl)pentaerythritol diphosphite (available as, for example, a trade name: ADEKA STAB PEP-36, manufactured by Adeka Corporation), bis(2,6-di-t-butyl-4-ethylphenyl)pentaerythritol diphosphite, bis(2,6-di-t-butyl-4-isopropylphenyl)pentaerythritol diphosphite, bis(2,4,6-tri-t-butylphenyl)pentaerythritol diphosphite, bis(2,6-di-t-butyl-4-sec-butylphenyl)pentaerythritol diphosphite, bis(2,6-di-t-butyl-4-t-octylphenyl)pentaerythritol diphosphite, bis(2,4-dicumylphenyl)pentaerythritol diphosphite, and the like are exemplified; and bis(2,6-di-t-butyl-4-methylphenyl)pentaerythritol diphosphite and bis(2,4-dicumylphenyl)pentaerythritol diphosphite (available as, for example, a trade name: ADEKA STAB PEP-45, manufactured by Adeka Corporation) are especially preferable.

As the phosphonite compound, for example, tetrakis(2,4-di-t-butylphenyl)-4,4'-biphenylene diphosphonite (available as, for example, a trade name: IRGAFOS P-EPQ, manufactured by BASF SE), tetrakis(2,5-di-t-butylphenyl)-4,4'-biphenylene diphosphonite, tetrakis(2,3,4-trimethylphenyl)-4,4'-biphenylene diphosphonite, tetrakis(2,3-dimethyl-5-ethylphenyl)-4,4'-biphenylene diphosphonite, tetrakis(2,6-di-t-butyl-5-ethylphenyl)-4,4'-biphenylene diphosphonite, tetrakis(2,3,4-tributylphenyl)-4,4'-biphenylene diphosphonite, tetrakis(2,4,6-tri-t-butylphenyl)-4,4'-biphenylene diphosphonite, and the like are exemplified; and tetrakis(2,4-di-t-butylphenyl)-4,4'-biphenylene diphosphonite is especially preferable.

In addition, a combined use of the phenol compound and the phosphorus compound is preferable because an effect that is excellent in terms of a color tone-improving effect is revealed.

(Inorganic compound (B5))

As the inorganic compound (B5), a copper compound and a halide are preferable. The copper compound which is used as the inorganic compound (B5) includes a variety of inorganic acids or organic acid copper salts but excludes a halide as described later. The copper salt may be either a cuprous salt or a cupric salt, and specific examples thereof include copper chloride, copper bromide, copper iodide, copper phosphate, and copper stearate and besides, natural minerals such as hydrotalcite, stichtite, pyrolite, etc.

In addition, as the halide which is used as the inorganic compound (B5), for example, alkali metal or alkaline earth metal halides; ammonium halides and quaternary ammonium halides of an organic compound; and organic halides such as alkyl halides, aryl halides, etc. are exemplified, and specific examples thereof include ammonium iodide, stearyltriethylammonium bromide, benzyltriethylammonium iodide, and the like. Of these, alkali metal halides such as potassium chloride, sodium chloride, potassium bromide, potassium iodide, sodium iodide, etc. are suitable.

A combined use of the copper compound and the halide, particularly a combined use of the copper compound

and the alkali metal halide, is preferable because excellent effects are revealed from the standpoints of resistance to heat discoloration and weather resistance (light fastness). For example, in the case where the copper compound is used solely, there is a concern that the molded article is colored reddish brown by copper, and this coloration is not preferable depending upon an application. In that case, by using the copper compound and the halide in combination, it is possible to prevent discoloration into a reddish brown color.

A content of the stabilizer (B) in the polyether polyamide composition of the present invention is preferably from 0.01 to 1 part by mass, more preferably from 0.01 to 0.8 parts by mass, and still more preferably from 0.1 to 0.5 parts by mass based on 100 parts by mass of the polyether polyamide (A1) or (A2). When the content of the stabilizer (B) is 0.01 parts by mass or more, effects for improving the heat discoloration and improving the weather resistance/light fastness can be thoroughly revealed, whereas when the content of the stabilizer (B) is 1 part by mass or less, an appearance defect and a lowering of mechanical physical properties of the molded article can be suppressed.

<Other components>

The polyether polyamide composition of the present invention can be blended with additives such as a matting agent, an ultraviolet ray absorber, a nucleating agent, a plasticizer, a flame retarder, an antistatic agent, a coloration preventive, a gelation preventive, etc. as the need arises within the range where properties thereof are not hindered.

In addition, the polyether polyamide composition of the present invention can be blended with a thermoplastic resin such as a polyamide resin, a polyester resin, a polyolefin resin, etc. as the need arises within the range where properties thereof are not hindered.

As the polyamide resin, polycaproamide (nylon 6), polyundecanamide (nylon 11), polydodecanamide (nylon 12), polytetramethylene adipamide (nylon 46), polyhexamethylene adipamide (nylon 66), polyhexamethylene azelamide (nylon 69), polyhexamethylene sebacamide (nylon 610), polyundecamethylene adipamide (nylon 116), polyhexamethylene dodecamide (nylon 612), polyhexamethylene terephthalamide (nylon 6T (T represents a terephthalic acid component unit; hereinafter the same)), polyhexamethylene isophthalamide (nylon 61 (I represents an isophthalic acid component unit; hereinafter the same)), polyhexamethylene terephthalisophthalamide (nylon 6TI), polyheptamethylene terephthalamide (nylon 9T), poly-m-xylylene adipamide (nylon MXD6 (MXD represents an m-xylylenediamine component unit; hereinafter the same)), poly-m-xylylene sebacamide (nylon MXD 10), poly-p-xylylene sebacamide (nylon PXD10 (PXD represents a p-xylylenediamine component unit)), a polyamide resin obtained by polycondensation of 1,3- or 1,4-bis(aminomethyl)cyclohexane and adipic acid (nylon 1,3-/1,4-BAC6 (BAC represents a bis(aminomethyl)cyclohexane component unit), and copolymerized amides thereof, and the like can be used.

Examples of the polyester resin include a polyethylene terephthalate resin, a polyethylene terephthalate-isophthalate copolymer resin, a polyethylene-1,4-cyclohexane dimethylene-terephthalate copolymer resin, a polyethylene-2,6-naphthalene dicarboxylate resin, a polyethylene-2,6-naphthalene dicarboxylate-terephthalate copolymer resin, a polyethylene-terephthalate-4,4'-biphenyl dicarboxylate copolymer resin, a poly-1,3-propylene-terephthalate resin, a polybutylene terephthalate resin, a polybutylene-2,6-naphthalene dicarboxylate resin, and the like. Examples of the more preferred polyester resin include a polyethylene terephthalate resin, a polyethylene terephthalate-isophthalate copolymer resin, a polybutylene terephthalate resin, and a polyethylene-2,6-naphthalene dicarboxylate resin.

Examples of the polyolefin resin include polyethylenes such as low density polyethylene (LDPE), linear low density polyethylene (LLDPE), very low density polyethylene (VLDPE), medium density polyethylene (MDPE), high density polyethylene (HDPE), etc.; polypropylenes such as a propylene homopolymer, a random or block copolymer of propylene and ethylene or an $\alpha$-olefin, etc.; mixtures of two or more kinds thereof; and the like. A majority of the polyethylenes is a copolymer of ethylene and an $\alpha$-olefin. In addition, the polyolefin resin includes a modified polyolefin resin modified with a small amount of a carboxyl group-containing monomer such as acrylic acid, maleic acid, methacrylic acid, maleic anhydride, fumaric acid, itaconic acid, etc. The modification is in general performed by means of copolymerization or graft modification.

By utilizing the polyether polyamide composition of the present invention for at least a part of a thermoplastic resin such as a polyamide resin, a polyester resin, a polyolefin resin, etc., a molded material which is excellent in terms of toughness, flexibility, and impact resistance can be obtained by a molding method such as injection molding, extrusion molding, blow molding, etc.

[Physical properties of polyether polyamide composition]

In the following description of physical properties, the "polyether polyamide composition" means a polyether polyamide composition containing the polyether polyamide (A1) or a polyether polyamide composition containing the polyether polyamide (A2) unless otherwise specifically indicated.

A relative viscosity of the polyether polyamide composition of the present invention is preferably in the range of from 1.1 to 3.0, more preferably in the range of from 1.1 to 2.9, and still more preferably in the range of from 1.1 to

2.8 from the viewpoints of moldability and melt mixing properties with other resins. The relative viscosity is measured by a method described in the Examples.

A melting point of the polyether polyamide composition is preferably in the range of from 170 to 270°C, more preferably in the range of from 175 to 270°C, and still more preferably in the range of from 180 to 270°C from the viewpoint of heat resistance. The melting point is measured by a method described in the Examples.

A number average molecular weight (Mn) of the polyether polyamide composition is preferably in the range of from 8,000 to 200,000, more preferably in the range of from 9,000 to 150,000, and still more preferably in the range of from 10,000 to 100,000 from the viewpoints of moldability and melt mixing properties with other resins. The number average molecular weight (Mn) is measured by a method described in the Examples.

In the polyether polyamide composition of the present invention, a tensile strength retention rate calculated according to the following equation is preferably 75% or more, more preferably 85% or more, still more preferably 90% or more, and yet still more preferably 100% or more from the viewpoint of heat aging resistance.

Tensile strength retention rate (%) = [{Breaking stress of film after heat treatment at 130°C for 72 hours (MPa)}/{Breaking stress of film before heat treatment at 130°C for 72 hours (MPa)}] $\times$ 100

Here, the breaking stress of film is measured by a method described in the Examples.

[Production of polyether polyamide composition]

The polyether polyamide composition of the present invention is obtained by blending the above-described polyether polyamide (A1) or (A2) with the stabilizer (B) and other components. A blending method is not particularly limited, and examples thereof include a technique in which the stabilizer (B) and the like are added to the polyether polyamide (A1) or (A2) in a molten state in a reaction tank; a technique in which the stabilizer (B) and the like are dry blended in the polyether polyamide (A1) or (A2), followed by melt kneading by an extruder; and the like.

Examples of a method of melt kneading the polyether polyamide composition of the present invention include a method of performing melt kneading by using every kind of generally used extruder such as a single-screw or twin-screw extruder, etc. and the like; however, of these, a method of using a twin-screw extruder is preferable from the standpoints of productivity, versatility, and the like. On that occasion, a melt kneading temperature is set up preferably to the range of the melting point of the polyether polyamide (A1) or (A2) or higher and not higher than a temperature that is higher by 80°C than the melting point, and more preferably to the range of a temperature that is higher by 10°C than the melting point of the (A1) or (A2) component or higher and not higher than a temperature that is higher by 60°C than the melting point. When the melt kneading temperature is the melting point of the polyether polyamide (A1) or (A2) or higher, the solidification of the component (A) can be suppressed, whereas when it is not higher than a temperature that is higher by 80°C than the melting point, the heat deterioration of the component (A) can be suppressed.

A retention time of melt kneading is adjusted to preferably the range of from 1 to 10 minutes, and more preferably the range of from 2 to 7 minutes. When the retention time is one minute or more, dispersion between the polyether polyamide (A1) or (A2) and the stabilizer (B) becomes sufficient, whereas when the retention time is 10 minutes or less, the heat deterioration of the polyether polyamide (A1) or (A2) can be suppressed.

It is preferable to perform melt kneading by using a twin-screw extruder in which the screw has at least one or more reverse helix element portions and/or kneading disc portions, while allowing a part of the polyether polyamide composition to retain in the subject portion(s).

The melt kneaded polyether polyamide composition may be subjected to extrusion molding as it is, thereby forming into a molded article such as a film, etc., or it may be once formed into pellets, followed by again performing extrusion molding, injection molding, or the like, thereby forming into a variety of molded articles.

[Molded article]

The molded article of the present invention is one including the above-described polyether polyamide composition and can be obtained by molding the polyether polyamide composition of the present invention into a variety of forms by a conventionally known molding method. As the molding method, for example, molding methods such as injection molding, blow molding, extrusion molding, compression molding, vacuum molding, press molding, direct blow molding, rotational molding, sandwich molding, two-color molding, etc. can be exemplified.

The molded article including the polyether polyamide composition of the present invention has both excellent heat stability and heat aging resistance and is suitable as automobile parts, electric parts, electronic parts, and the like. In particular, as the molded article composed of the polyether polyamide composition, hoses, tubes, or metal covering materials are preferable.

EXAMPLES

The present invention is hereunder described in more detail by reference to the Examples, but it should not be construed that the present invention is limited thereto. Incidentally, in the present Examples, various measurements were performed by the following methods.

1) Relative viscosity (ηr)

0.2 g of a sample was accurately weighed and dissolved in 20 mL of 96% sulfuric acid at from 20 to 30°C with stirring. After completely dissolving, 5 mL of the solution was rapidly taken into a Cannon-Fenske viscometer, allowed to stand in a thermostat at 25°C for 10 minutes, and then measured for a fall time (t). In addition, a fall time (to) of the 96% sulfuric acid itself was similarly measured. A relative viscosity was calculated from t and to according to the following equation.

$$\text{Relative viscosity} = t/t_0$$

2) Number average molecular weight (Mn)

First of all, a sample was dissolved in a phenol/ethanol mixed solvent and a benzyl alcohol solvent, respectively, and a terminal carboxyl group concentration and a terminal amino group concentration were determined by means of neutralization titration in hydrochloric acid and a sodium hydroxide aqueous solution, respectively. A number average molecular weight was determined from quantitative values of the terminal amino group concentration and the terminal carboxyl group concentration according to the following equation.
Number average molecular weight = 2 × 1,000,000/([$NH_2$] + [COOH])
[$NH_2$]: Terminal amino group concentration (μeq/g)
[COOH]: Terminal carboxyl group concentration (μeq/g)

3) Differential scanning calorimetry (glass transition temperature, crystallization temperature, and melting point)

The differential scanning calorimetry was performed in conformity with JIS K7121 and K7122. By using a differential scanning calorimeter (a trade name: DSC-60, manufactured by Shimadzu Corporation), each sample was charged in a DSC measurement pan and subjected to a pre-treatment of raising the temperature to 300°C in a nitrogen atmosphere at a temperature rise rate of 10°C/min and rapid cooling, followed by performing the measurement. As for the measurement condition, the temperature was raised at a rate of 10°C/min, and after keeping at 300°C for 5 minutes, the temperature was dropped to 100°C at a rate of -5°C/min, thereby measuring a glass transition temperature Tg, a crystallization temperature Tch, and a melting point Tm.

4) Tensile test (tensile elastic modulus, rate of tensile elongation at break, and tensile strength retention rate)

(Measurement of tensile elastic modulus and rate of tensile elongation at break)

The tensile elastic modulus and the rate of tensile elongation at break were measured in conformity with JIS K7161. A fabricated film having a thickness of about 100 μm was cut out in a size of 10 mm × 100 mm to prepare a test piece. The tensile test was carried out using a tensile tester (strograph, manufactured by Toyo Seiki Seisaku-sho, Ltd.) under conditions at a measurement temperature of 23°C and a humidity of 50% RH and at a tensile rate of 50 mm/min in a chuck-to-chuck distance of 50 mm, thereby determining a tensile elastic modulus and a rate of tensile elongation at break.

(Measurement of tensile strength retention rate)

First of all, the film was subjected to a heat treatment using a hot air dryer at 130°C for 72 hours. Subsequently, the film before and after the heat treatment was subjected to a tensile test in conformity with JIS K7127, thereby measuring a breaking stress (MPa). Incidentally, the measurement was carried out using a tensile tester (strograph, manufactured by Toyo Seiki Seisaku-sho, Ltd.) as an apparatus under conditions while setting a test piece width to 10 mm and a chuck-to-chuck distance to 50 mm, at a tensile rate of 50 mm/min, a measurement temperature of 23°C and a humidity of 50% RH. A ratio in breaking stress before and after the heat treatment was defined as a tensile strength retention rate, and

the tensile strength retention rate (%) was calculated according to the following equation. It is meant that the higher this tensile strength retention rate, the more excellent the heat aging resistance is.

$$\text{Tensile strength retention rate (\%)} = [\{\text{Breaking stress of film after heat treatment at 130°C for 72 hours (MPa)}\}/\{\text{Breaking stress of film before heat treatment at 130°C for 72 hours (MPa)}\}] \times 100$$

5) Yellowness: Measurement of YI value

The YI value was measured in conformity with JIS K7105. A fabricated film having a thickness of about 100 μm was cut out in a size of 50 mm x 50 mm to prepare a test piece. A haze measuring apparatus (Model: COH-300A, manufactured by Nippon Denshoku Industries Co., Ltd.) was used as a measuring apparatus.

6) Sulfur atom concentration (unit: ppm)

A dicarboxylic acid or a polyether polyamide was subjected to tablet molding with a press machine, followed by carrying out a fluorescent X-ray analysis (XRF). A fluorescent X-ray analyzer (a trade name: ZSX Primus, manufactured by Rigaku Corporation) was used, and an Rh vacuum tube (4 kW) was used as a vacuum tube. A polypropylene film was used as a film for analyzer window, and EZ scanning was carried out in an irradiation region of 30 mmφ in a vacuum atmosphere.

Example 1-1-1

In a reaction vessel having a capacity of about 3 L and equipped with a stirrer, a nitrogen gas inlet, and a condensed water discharge port, 584.60 g of adipic acid, 0.6832 g of sodium hypophosphite monohydrate, and 0.4759 g of sodium acetate were charged, and after thoroughly purging the inside of the vessel with nitrogen, the mixture was melted at 170°C while feeding a nitrogen gas at a rate of 20 mL/min. A mixed liquid of 490.32 g of m-xylylenediamine (MXDA) (manufactured by Mitsubishi Gas Chemical Company, Inc.) and 400.00 g of a polyether diamine (a trade name: XTJ-542, manufactured by Huntsman Corporation, USA) was added dropwise thereto while gradually raising the temperature to 260°C, and the mixture was polymerized for about 2 hours to obtain a polyether polyamide (A1). ηr = 1.38, [COOH] = 110.17 μeq/g, $[NH_2]$ = 59.57 μeq/g, Mn = 11,783, Tg = 71.7°C, Tch = 108.3°C, Tm = 232.8°C

Subsequently, 100 parts by mass of the resulting polyether polyamide (A1) and 0.5 parts by mass of, as a stabilizer, N,N'-di-2-naphthyl-p-phenylenediamine (a trade name: NOCRAC White, manufactured by Ouchi Shinko Chemical Industrial Co., Ltd., stabilizer (B1-1)) were dry blended, and the blend was extrusion molded at a temperature of 260°C by using a twin-screw extruder equipped with a screw having a diameter of 30 mm and a T die, thereby obtaining a non-stretched film having a thickness of about 100 μm.

The resulting film was subjected to the above-described tensile test. Results are shown in Table 1.

Examples 1-1-2 to 1-1-5

Films were obtained in the same manner as that in Example 1-1-1, except for changing the kind of the stabilizer in Example 1-1-1 as shown in Table 1, and then subjected to the above-described tensile test. Results are shown in Table 1.

Comparative Example 1-1-1

In a reaction vessel having a capacity of about 3 L and equipped with a stirrer, a nitrogen gas inlet, and a condensed water discharge port, 584.5 g of adipic acid, 0.6210 g of sodium hypophosphite monohydrate, and 0.4325 g of sodium acetate were charged, and after thoroughly purging the inside of the vessel with nitrogen, the mixture was melted at 170°C while feeding a nitrogen gas at a rate of 20 mL/min. 544.80 g of m-xylylenediamine (MXDA) (manufactured by Mitsubishi Gas Chemical Company, Inc.) was added dropwise thereto while gradually raising the temperature to 260°C, and the mixture was polymerized for about 2 hours to obtain a polyamide. ηr = 2.10, [COOH] = 104.30 μeq/g, $[NH_2]$ = 24.58 μeq/g, Mn = 15,500, Tg = 86.1 °C, Tch =153.0°C, Tm = 239.8°C

The resulting polyamide was extrusion molded at a temperature of 260°C, thereby fabricating a non-stretched film having a thickness of about 100 μm.

The resulting film was subjected to the above-described tensile test. Results are shown in Table 1.

Comparative Example 1-1-2

The polyether polyamide (A1) obtained in Example 1-1-1 was extrusion molded at a temperature of 260°C, thereby fabricating a non-stretched film having a thickness of about 100 μm.

The resulting film was subjected to the above-described tensile test. Results are shown in Table 1.

Incidentally, the abbreviations in the table are as follows.

XTJ-542: Polyether diamine, manufactured by Huntsman Corporation, USA According to the catalog of Huntsman Corporation, USA, in the foregoing general formula (1), an approximate figure of (x1 + z1) is 6.0, and an approximate figure of y1 is 9.0, and a number average molecular weight is 1,000.

Stabilizer (B1-1): N,N'-Di-2-naphthyl-p-phenylenediamine (a trade name: NOCRAC White, manufactured by Ouchi Shinko Chemical Industrial Co., Ltd.)

Stabilizer (B1-2): 4,4'-Bis(α,α-dimethylbenzyl)diphenylamine (a trade name: NOCRAC CD, manufactured by Ouchi Shinko Chemical Industrial Co., Ltd.)

Stabilizer (B2-1): Pentaerythritol tetrakis(3-lauryl thiopropionate) (a trade name: SUMILIZER TP-D, manufactured by Sumitomo Chemical Co., Ltd.)

Stabilizer (B2-2): 2-Mercapto benzimidazole (a trade name: NOCRAC MB, manufactured by Ouchi Shinko Chemical Industrial Co., Ltd.)

Stabilizer (B3-1): 3,9-Bis[2-[3-(3-t-butyl-4-hydroxy-5-methylphenyl)propionyloxy]-1,1-dimethylethyl]-2,4,8,10-tetraoxaspiro[5.5]undecane (a trade name: SUMILIZER GA-80, manufactured by Sumitomo Chemical Co., Ltd.)

Stabilizer (B3-2): N,N'-Hexamethylene bis(3,5-di-t-butyl-4-hydroxy-hydrocinnamide) (a trade name: IRGANOX 1098, manufactured by BASF SE)

Stabilizer (B4-1): Bis(2,4-dicumylphenyl)pentaerythritol diphosphite (a trade name: ADEKA STAB PEP-45, manufactured by Adeka Corporation)

Stabilizer (B4-2): Tetrakis(2,4-di-t-butylphenyl)-4,4'-biphenylene diphosphonite (3,5-di-t-butyl-4-hydroxy-hydrocinnamide) (a trade name: IRGAFOS P-EPQ, manufactured by BASF SE)

Stabilizer (B5-1): Sodium iodide (manufactured by Wako Pure Chemical Industries, Ltd.)

Stabilizer (B5-2): Potassium iodide (manufactured by Wako Pure Chemical Industries, Ltd.)

Table 1

| | | | | Examples | | | | | Comparative Examples | |
|---|---|---|---|---|---|---|---|---|---|---|
| | | | | 1-1-1 | 1-1-2 | 1-1-3 | 1-1-4 | 1-1-5 | 1-1-1 | 1-1-2 |
| Composition | Diamine component (Molar ratio) | (a1-1) | XTJ-542 | 10 | 10 | 10 | 10 | 10 | - | 10 |
| | | (a-2) | Xylylenediamine | 90 | 90 | 90 | 90 | 90 | 100 | 90 |
| | | (MXDA/PXDA molar ratio) | | (100/0) | (100/0) | (100/0) | (100/0) | (100/0) | (100/0) | (100/0) |
| | Dicarboxylic acid (Molar ratio) | Adipic acid | | 100 | 100 | 100 | 100 | 100 | 100 | 100 |
| | Stabilizer (parts by mass)*1 | (B1-1) | NOCRAC White | 0.5 | - | - | - | - | - | - |
| | | (B2-1) | SUMILIZER TP-D | - | 0.5 | - | - | - | - | - |
| | | (B3-1) | SUMILIZER GA-80 | - | - | 0.5 | - | - | - | - |
| | | (B4-1) | ADEKA STAB PEP-45 | - | - | - | 0.5 | - | - | - |
| | | (B5-1) | Sodium iodide | - | - | - | - | 0.5 | - | - |
| Physical properties of polyether polyamide | Glass transition temperature (°C) | | | 71.7 | 71.7 | 71.7 | 71.7 | 71.7 | 86.1 | 71.7 |
| | Melting point (°C) | | | 232.8 | 232.8 | 232.8 | 232.8 | 232.8 | 239.8 | 232.8 |
| | Relative viscosity | | | 1.38 | 1.38 | 1.38 | 1.38 | 1.38 | 2.10 | 1.38 |
| Physical properties of film | Rate of tensile elongation at break (%) | | | 425 | 430 | 422 | 421 | 432 | 2.9 | 429 |
| | Tensile modulus (MPa) | | | 1015 | 1030 | 1010 | 1027 | 1028 | 3100 | 1026 |
| | Tensile strength retention rate (%) | | | 110 | 110 | 90 | 90 | 110 | 50 | 30 |

*1: Parts by mass as added based on 100 parts by mass of the polyether polyamide (A1)

Example 1-2-1

In a reaction vessel having a capacity of about 3 L and equipped with a stirrer, a nitrogen gas inlet, and a condensed water discharge port, 555.37 g of adipic acid, 0.6490 g of sodium hypophosphite monohydrate, and 0.4521 g of sodium acetate were charged, and after thoroughly purging the inside of the vessel with nitrogen, the mixture was melted at 170°C while feeding a nitrogen gas at a rate of 20 mL/min. A mixed liquid of 326.06 g of m-xylylenediamine (MXDA) (manufactured by Mitsubishi Gas Chemical Company, Inc.) and 139.74 g of p-xylylenediamine (PXDA) (manufactured by Mitsubishi Gas Chemical Company, Inc.) (molar ratio (MXDA/PXDA = 70/30)) and 380.00 g of a polyether diamine (a trade name: XTJ-542, available from Huntsman Corporation, USA) was added dropwise thereto while gradually raising the temperature to 270°C, and the mixture was polymerized for about 2 hours to obtain a polyether polyamide (A1). ηr = 1.36, [COOH] = 64.82 μeq/g, [$NH_2$] = 100.70 μeq/g, Mn = 12,083, Tg = 79.3°C, Tch = 107.1°C, Tm = 251.4°C

Subsequently, 100 parts by mass of the resulting polyether polyamide (A1) and 0.5 parts by mass of, as a stabilizer, N,N'-di-2-naphthyl-p-phenylenediamine (a trade name: NOCRAC White, manufactured by Ouchi Shinko Chemical Industrial Co., Ltd., stabilizer (B1-1)) were dry blended, and the blend was extrusion molded at a temperature of 280°C by using a twin-screw extruder equipped with a screw having a diameter of 30 mm and a T die, thereby obtaining a non-stretched film having a thickness of about 100 μm.

The resulting film was subjected to the above-described tensile test. Results are shown in Table 2.

Examples 1-2-2 to 1-2-5

Films were obtained in the same manner as that in Example 1-2-1, except for changing the kind of the stabilizer in Example 1-2-1 as shown in Table 2, and then subjected to the above-described tensile test. Results are shown in Table 2.

Comparative Example 1-2-1

In a reaction vessel having a capacity of about 3 L and equipped with a stirrer, a nitrogen gas inlet, and a condensed water discharge port, 730.8 g of adipic acid, 0.6322 g of sodium hypophosphite monohydrate, and 0.4404 g of sodium acetate were charged, and after thoroughly purging the inside of the vessel with nitrogen, the mixture was melted at 170°C while feeding a nitrogen gas at a rate of 20 mL/min. A mixed liquid of 476.70 g of m-xylylenediamine (MXDA) (manufactured by Mitsubishi Gas Chemical Company, Inc.) and 204.30 g of p-xylylenediamine (PXDA) (manufactured by Mitsubishi Gas Chemical Company, Inc.) (molar ratio (MXDA/PXDA = 70/30)) was added dropwise thereto while gradually raising the temperature to 275°C, and the mixture was polymerized for about 2 hours to obtain a polyether polyamide. ηr = 2.07, [COOH] = 55.70 μeq/g, [$NH_2$] = 64.58 μeq/g, Mn = 16,623, Tg = 89.0°C, Tch = 135.0°C, Tm = 257.0°C

The resulting polyamide was extrusion molded at a temperature of 275°C, thereby fabricating a non-stretched film having a thickness of about 100 μm.

The resulting film was subjected to the above-described tensile test. Results are shown in Table 2.

Comparative Example 1-2-2

The polyether polyamide (A1) obtained in Example 1-2-1 was extrusion molded at a temperature of 280°C, thereby fabricating a non-stretched film having a thickness of about 100 μm.

The resulting film was subjected to the above-described tensile test. Results are shown in Table 2.

Table 2

| | | | | Examples | | | | | Comparative Examples | |
|---|---|---|---|---|---|---|---|---|---|---|
| | | | | 1-2-1 | 1-2-2 | 1-2-3 | 1-2-4 | 1-2-5 | 1-2-1 | 1-2-2 |
| Composition | Diamine component (Molar ratio) | (a1-1) | XTJ-542 | 10 | 10 | 10 | 10 | 10 | - | 10 |
| | | (a-2) | Xylylenediamine | 90 | 90 | 90 | 90 | 90 | 100 | 90 |
| | | (MXDA/PXDA molar ratio) | | (70/30) | (70/30) | (70/30) | (70/30) | (70/30) | (70/30) | (70/30) |
| | Dicarboxylic acid (Molar ratio) | Adipic acid | | 100 | 100 | 100 | 100 | 100 | 100 | 100 |
| | Stabilizer (parts by mass)*1 | (B1-1) | NOCRAC White | 0.5 | - | - | - | - | - | - |
| | | (B2-2) | NOCRAC MB | - | 0.5 | - | - | - | - | - |
| | | (B3-1) | SUMILIZER GA-80 | - | - | 0.5 | - | - | - | - |
| | | (B4-2) | IRGAFOS P-EPQ | - | - | - | 0.5 | - | - | - |
| | | (B5-1) | Sodium iodide | - | - | - | - | 0.5 | - | - |
| Physical properties of polyether polyamide | Glass transition temperature (°C) | | | 79.3 | 79.3 | 79.3 | 79.3 | 79.3 | 89.0 | 79.3 |
| | Melting point (°C) | | | 251.4 | 251.4 | 251.4 | 251.4 | 251.4 | 257.0 | 251.4 |
| | Relative viscosity | | | 1.36 | 1.36 | 1.36 | 1.36 | 1.36 | 2.07 | 1.36 |
| Physical properties of film | Rate of tensile elongation at break (%) | | | 565 | 562 | 555 | 550 | 560 | 3 | 558 |
| | Tensile modulus (MPa) | | | 1282 | 1289 | 1292 | 1295 | 1280 | 3522 | 1287 |
| | Tensile strength retention rate (%) | | | 110 | 110 | 90 | 90 | 110 | 45 | 30 |
| *1: Parts by mass as added based on 100 parts by mass of the polyether polyamide (A1) | | | | | | | | | | |

Example 1-3-1

In a reaction vessel having a capacity of about 3 L and equipped with a stirrer, a nitrogen gas inlet, and a condensed water discharge port, 667.4 g of sebacic acid (sulfur atom concentration: 70 ppm), 0.6587 g of sodium hypophosphite monohydrate, and 0.4588 g of sodium acetate were charged, and after thoroughly purging the inside of the vessel with nitrogen, the mixture was melted at 170°C while feeding a nitrogen gas at a rate of 20 mL/min. A mixed liquid of 404.51 g of m-xylylenediamine (MXDA) (manufactured by Mitsubishi Gas Chemical Company, Inc.) and 330.00 g of a polyether diamine (a trade name: XTJ-542, manufactured by Huntsman Corporation, USA) was added dropwise thereto while gradually raising the temperature to 260°C, and the mixture was polymerized for about 2 hours to obtain a polyether polyamide (A1). ηr = 1.29, [COOH] = 100.8 μeq/g, [$NH_2$] = 38.4 μeq/g, Mn = 14,368, Tg = 29.2°C, Tch = 58.0°C, Tm = 185.0°C A sulfur atom concentration in the polyether polyamide (A1) was 33 ppm.

Subsequently, 100 parts by mass of the resulting polyether polyamide (A1) and 0.5 parts by mass of, as a stabilizer, 4,4'-bis(α,α-dimethylbenzyl)diphenylamine (a trade name: NOCRAC CD, manufactured by Ouchi Shinko Chemical Industrial Co., Ltd., stabilizer (B1-2)) were dry blended, and the blend was extrusion molded at a temperature of 235°C by using a twin-screw extruder equipped with a screw having a diameter of 30 mm and a T die, thereby obtaining a non-stretched film having a thickness of about 100 μm.

The resulting film was subjected to the above-described tensile test and measurement of YI value. Results are shown in Table 3.

Examples 1-3-2 to 1-3-5

Films were obtained in the same manner as that in Example 1-3-1, except for changing the kind of the stabilizer in Example 1-3-1 as shown in Table 3, and then subjected to the above-described tensile test and measurement of YI value. Results are shown in Table 3.

Comparative Example 1-3-1

In a reaction vessel having a capacity of about 3 L and equipped with a stirrer, a nitrogen gas inlet, and a condensed water discharge port, 809.0 g of sebacic acid (sulfur atom concentration: 0 ppm), 0.6210 g of sodium hypophosphite monohydrate, and 0.4325 g of sodium acetate were charged, and after thoroughly purging the inside of the vessel with nitrogen, the mixture was melted at 170°C while feeding a nitrogen gas at a rate of 20 mL/min. 544.80 g of m-xylylenediamine (MXDA) (manufactured by Mitsubishi Gas Chemical Company, Inc.) was added dropwise thereto while gradually raising the temperature to 260°C, and the mixture was polymerized for about 2 hours to obtain a polyamide. ηr = 1.80, [COOH] = 88.5 μeq/g, [$NH_2$] = 26.7 μeq/g, Mn = 17,300, Tg = 61.2°C, Tch = 114.1 °C, Tm = 191.5°C

The resulting polyamide was extrusion molded at a temperature of 220°C, thereby fabricating a non-stretched film having a thickness of about 100 μm.

The resulting film was subjected to the above-described tensile test and measurement of YI value. Results are shown in Table 3.

Comparative Example 1-3-2

The polyether polyamide (A1) obtained in Example 1-3-1 was extrusion molded at a temperature of 235°C, thereby fabricating a non-stretched film having a thickness of about 100 μm.

The resulting film was subjected to the above-described tensile test and measurement of YI value. Results are shown in Table 3.

Table 3

| | | | | Examples | | | | | Comparative Examples | |
|---|---|---|---|---|---|---|---|---|---|---|
| | | | | 1-3-1 | 1-3-2 | 1-3-3 | 1-3-4 | 1-3-5 | 1-3-1 | 1-3-2 |
| Composition | Diamine component (Molar ratio) | (a1-1) | XTJ-542 | 10 | 10 | 10 | 10 | 10 | - | 10 |
| | | (a-2) | Xylylenediamine | 90 | 90 | 90 | 90 | 90 | 100 | 90 |
| | | (MXDA/PXDA molar ratio) | | (100/0) | (100/0) | (100/0) | (100/0) | (100/0) | (100/0) | (100/0) |
| | Dicarboxylic acid | Sebacic acid (molar ratio) | | 100 | 100 | 100 | 100 | 100 | 100 | 100 |
| | | Sulfur atom concentration (ppm) | | 70 | 70 | 70 | 70 | 70 | - | - |
| | Stabilizer (parts by mass)*1 | (B1-2) | NOCRAC CD | 0.5 | - | - | - | - | - | - |
| | | (B2_1) | SUMILIZER TP-D | - | 0.5 | - | - | - | - | - |
| | | (B3-2) | IRGANOX 1098 | - | - | 0.5 | - | - | - | - |
| | | (B4-1) | ADEKASTAB PEP-45 | - | - | - | 0.5 | - | - | - |
| | | (B5-1) | Sodium iodide | - | - | - | - | 0.5 | - | - |
| Physical properties of polyether polyamide | Glass transition temperature (°C) | | | 29.2 | 29.2 | 29.2 | 29.2 | 29.2 | 61.2 | 29.2 |
| | Melting point (°C) | | | 185.0 | 185.0 | 185.0 | 185.0 | 185.0 | 191.5 | 185.0 |
| | Relative viscosity | | | 1.29 | 1.29 | 1.29 | 1.29 | 1.29 | 1.80 | 1.29 |
| | Sulfur atom concentration in polyether polyamide (ppm) | | | 33 | 33 | 33 | 33 | 33 | 0 | 0 |
| Physical properties of film | Rate of tensile elongation at break (%) | | | 408 | 410 | 400 | 397 | 405 | 45 | 403 |
| | Tensile modulus (MPa) | | | 631 | 629 | 637 | 640 | 635 | 1700 | 633 |
| | Tensile strength retention rate (%) | | | 110 | 110 | 90 | 90 | 110 | 40 | 30 |
| | Yellowness (YI) | | | 1.0 | 1.0 | 1.0 | 1.0 | 1.0 | 4.0 | 4.0 |

*1: Parts by mass as added based on 100 parts by mass of the polyether polyamide (A1)

Example 1-4-1

In a reaction vessel having a capacity of about 3 L and equipped with a stirrer, a nitrogen gas inlet, and a condensed water discharge port, 667.43 g of sebacic acid, 0.6587 g of sodium hypophosphite monohydrate, and 0.4588 g of sodium acetate were charged, and after thoroughly purging the inside of the vessel with nitrogen, the mixture was melted at 170°C while feeding a nitrogen gas at a rate of 20 mL/min. A mixed liquid of 283.16 g of m-xylylenediamine (MXDA) (manufactured by Mitsubishi Gas Chemical Company, Inc.) and 121.35 g of p-xylylenediamine (PXDA) (manufactured by Mitsubishi Gas Chemical Company, Inc.) (molar ratio (MXDA/PXDA = 70/30)) and 330.00 g of a polyether diamine (a trade name: XTJ-542, available from Huntsman Corporation, USA) was added dropwise thereto while gradually raising the temperature to 260°C, and the mixture was polymerized for about 2 hours to obtain a polyether polyamide (A1). $\eta r$ = 1.31, [COOH] = 81.62 $\mu$eq/g, [$NH_2$] = 68.95 $\mu$eq/g, Mn = 13,283, Tg =12.9°C, Tch = 69.5°C, Tm = 204.5°C

Subsequently, 100 parts by mass of the resulting polyether polyamide (A1) and 0.5 parts by mass of, as a stabilizer, N,N'-di-2-naphthyl-p-phenylenediamine (a trade name: NOCRAC White, manufactured by Ouchi Shinko Chemical Industrial Co., Ltd., stabilizer (B1-1)) were dry blended, and the blend was extrusion molded at a temperature of 260°C by using a twin-screw extruder equipped with a screw having a diameter of 30 mm and a T die, thereby obtaining a non-stretched film having a thickness of about 100 $\mu$m.

The resulting film was subjected to the above-described tensile test. Results are shown in Table 4.

Examples 1-4-2 to 1-4-5

Films were obtained in the same manner as that in Example 1-4-1, except for changing the kind of the stabilizer in Example 1-4-1 as shown in Table 4, and then subjected to the above-described tensile test. Results are shown in Table 4.

Examples 1-4-6 to 1-4-8

Films were obtained in the same manner as that in Example 1-4-1 or 1-4-2, except for changing the addition amount of the stabilizer in Example 1-4-1 or 1-4-2 as shown in Table 4, and then subjected to the above-described tensile test. Results are shown in Table 4.

Examples 1-4-9 to 1-4-11

Films were obtained in the same manner as that in Example 1-4-1, except for changing the kind and addition amount of the stabilizer in Example 1-4-1 as shown in Table 4, and then subjected to the above-described tensile test. Results are shown in Table 4.

Comparative Example 1-4-1

In a reaction vessel having a capacity of about 3 L and equipped with a stirrer, a nitrogen gas inlet, and a condensed water discharge port, 829.2 g of sebacic acid, 0.6365 g of sodium hypophosphite monohydrate, and 0.4434 g of sodium acetate were charged, and after thoroughly purging the inside of the vessel with nitrogen, the mixture was melted at 170°C while feeding a nitrogen gas at a rate of 20 mL/min. A mixed liquid of 390.89 g of m-xylylenediamine (MXDA) (manufactured by Mitsubishi Gas Chemical Company, Inc.) and 167.53 g of p-xylylenediamine (PXDA) (manufactured by Mitsubishi Gas Chemical Company, Inc.) (molar ratio (MXDA/PXDA = 70/30)) was added dropwise thereto while gradually raising the temperature to 260°C, and the mixture was polymerized for about 2 hours to obtain a polyether polyamide. $\eta r$ = 2.20, [COOH] = 81.8 $\mu$eq/g, [$NH_2$] = 26.9 $\mu$eq/g, Mn = 18,400, Tg = 65.9°C, Tch = 100.1°C, Tm = 213.8°C

The resulting polyamide was extrusion molded at a temperature of 240°C, thereby fabricating a non-stretched film having a thickness of about 100 $\mu$m.

The resulting film was subjected to the above-described tensile test. Results are shown in Table 4.

Comparative Example 1-4-2

The polyether polyamide (A1) obtained in Example 1-4-1 was extrusion molded at a temperature of 260°C, thereby fabricating a non-stretched film having a thickness of about 100 $\mu$m.

The resulting film was subjected to the above-described tensile test. Results are shown in Table 4.

Table 4

| | | | | Examples | | | | | | | | | | | Comparative Examples | |
|---|---|---|---|---|---|---|---|---|---|---|---|---|---|---|---|---|
| | | | | 14-1 | 1-4-2 | 1-4-3 | 1-4-4 | 1-4-5 | 1-4-6 | 1-4-7 | 1-4-8 | 1-4-9 | 1-4-10 | 1-4-11 | 1-4-1 | 1-4-2 |
| Composition | Diamine component (Molar ratio) | (a1-1) | XTJ-542 | 10 | 10 | 10 | 10 | 10 | 10 | 10 | 10 | 10 | 10 | 10 | - | 10 |
| | | (a-2) | Xylylenediamine | 90 | 90 | 90 | 90 | 90 | 90 | 90 | 90 | 90 | 90 | 90 | 100 | 90 |
| | | (MXDA/PXDA molar ratio) | | (70/30) | (70/30) | (70/30) | (70/30) | (70/30) | (70/30) | (70/30) | (70/30) | (70/30) | (70/30) | (70/30) | (70/30) | (70/30) |
| | Dicarboxylic acid (Molar ratio) | Sebacic acid | | 100 | 100 | 100 | 100 | 100 | 100 | 100 | 100 | 100 | 100 | 100 | 100 | 100 |
| | Stabilizer (parts by mass) *1 | (B1-1) | NOCRAC White | 0.5 | - | - | - | - | 0.01 | 1.0 | - | 0.5 | 0.9 | 0.05 | - | - |
| | | (B2-1) | SUMILIZER TP-D | - | 0.5 | - | - | - | - | - | 1.0 | 0.5 | 0.3 | 1.0 | - | - |
| | | (B3-1) | SUMILIZER GA-80 | - | - | 0.5 | - | - | - | - | - | - | - | - | - | - |
| | | (B4-1) | ADEKA STAB Petal5 | - | - | - | 0.5 | - | - | - | - | - | - | - | - | - |
| | | (B5-2) | Potassium chloride | - | - | - | - | 0.5 | - | - | - | - | - | - | - | - |
| Physical properties of polyether polyamide | Glass transition temperature (°C) | | | 12.9 | 12.9 | 12.9 | 12.9 | 12.9 | 12.9 | 12.9 | 12.9 | 12.9 | 12.9 | 12.9 | 65.9 | 12.9 |
| | Melting point (°C) | | | 204.5 | 204.5 | 204.5 | 204.5 | 204.5 | 204.5 | 204.5 | 204.5 | 204.5 | 204.5 | 204.5 | 213.8 | 204.5 |
| | Relative viscosity | | | 1.31 | 1.31 | 1.31 | 1.31 | 1.31 | 1.31 | 1.31 | 1.31 | 1.31 | 1.31 | 1.31 | 2.20 | 1.31 |
| Physical properties of film | Rate of tensile elongation at break (%) | | | 360 | 366 | 350 | 351 | 361 | 359 | 364 | 370 | 365 | 358 | 362 | 3.4 | 359 |
| | Tensile modulus (MPa) | | | 705 | 700 | 720 | 708 | 703 | 700 | 698 | 695 | 704 | 702 | 699 | 2030 | 700 |
| | Tensile strength retention rate (%) | | | 110 | 110 | 90 | 90 | 110 | 89 | 85 | 85 | 130 | 115 | 95 | 45.0 | 30.0 |

*1: Parts by mass as added based on 100 parts by mass of the polyether polyamide (A1)

From the results shown in Tables 1 to 4, it is noted that the polyether polyamide composition of the present invention is a material which is excellent in terms of not only melt moldability, crystallinity, and flexibility but heat stability and heat aging resistance.

Example 2-1-1

In a reaction vessel having a capacity of about 3 L and equipped with a stirrer, a nitrogen gas inlet, and a condensed water discharge port, 584.60 g of adipic acid, 0.6613 g of sodium hypophosphite monohydrate, and 0.4606 g of sodium acetate were charged, and after thoroughly purging the inside of the vessel with nitrogen, the mixture was melted at 170°C while feeding a nitrogen gas at a rate of 20 mL/min. A mixed liquid of 489.34 g of m-xylylenediamine (MXDA) (manufactured by Mitsubishi Gas Chemical Company, Inc.) and 359.28 g of a polyether diamine (a trade name: ED-900, manufactured by Huntsman Corporation, USA) was added dropwise thereto while gradually raising the temperature to 260°C, and the mixture was polymerized for about 2 hours to obtain a polyether polyamide (A2). $\eta r$ = 1.35, [COOH] = 73.24 μeq/g, [$NH_2$] = 45.92 μeq/g, Mn = 16,784, Tg = 42.1°C, Tch = 89.7°C, Tm = 227.5°C

Subsequently, 100 parts by mass of the resulting polyether polyamide (A2) and 0.5 parts by mass of, as a stabilizer, N,N'-di-2-naphthyl-p-phenylenediamine (a trade name: NOCRAC White, manufactured by Ouchi Shinko Chemical Industrial Co., Ltd., stabilizer (B1-1)) were dry blended, and the blend was extrusion molded at a temperature of 260°C by using a twin-screw extruder equipped with a screw having a diameter of 30 mm and a T die, thereby obtaining a non-stretched film having a thickness of about 100 μm.

The resulting film was subjected to the above-described tensile test. Results are shown in Table 5.

Examples 2-1-2 to 2-1-5

Films were obtained in the same manner as that in Example 2-1-1, except for changing the kind of the stabilizer in Example 2-1-1 as shown in Table 5, and then subjected to the above-described tensile test. Results are shown in Table 5.

Comparative Example 2-1-1

In a reaction vessel having a capacity of about 3 L and equipped with a stirrer, a nitrogen gas inlet, and a condensed water discharge port, 584.5 g of adipic acid, 0.6210 g of sodium hypophosphite monohydrate, and 0.4325 g of sodium acetate were charged, and after thoroughly purging the inside of the vessel with nitrogen, the mixture was melted at 170°C while feeding a nitrogen gas at a rate of 20 mL/min. 544.80 g of m-xylylenediamine (MXDA) (manufactured by Mitsubishi Gas Chemical Company, Inc.) was added dropwise thereto while gradually raising the temperature to 260°C, and the mixture was polymerized for about 2 hours to obtain a polyamide. $\eta r$ = 2.10, [COOH] = 104.30 μeq/g, [$NH_2$] = 24.58 μeq/g, Mn = 15,500, Tg = 86.1 °C, Tch = 153.0°C, Tm = 239.8°C

The resulting polyamide was extrusion molded at a temperature of 260°C, thereby fabricating a non-stretched film having a thickness of about 100 μm.

The resulting film was subjected to the above-described tensile test. Results are shown in Table 5.

Comparative Example 2-1-2

The polyether polyamide (A2) obtained in Example 2-1-1 was extrusion molded at a temperature of 260°C, thereby fabricating a non-stretched film having a thickness of about 100 μm.

The resulting film was subjected to the above-described tensile test. Results are shown in Table 5.

Incidentally, the abbreviations in the table are as follows.

ED-900: Polyether diamine, manufactured by Huntsman Corporation, USA According to the catalog of Huntsman Corporation, USA, in the foregoing general formula (2), an approximate figure of (x2 + z2) is 6.0, and an approximate figure of y2 is 12.5, and a number average molecular weight is 900.

Stabilizer (B1-1): N,N'-Di-2-naphthyl-p-phenylenediamine (a trade name: NOCRAC White, manufactured by Ouchi Shinko Chemical Industrial Co., Ltd.)

Stabilizer (B1-2): 4,4'-Bis(α,α-dimethylbenzyl)diphenylamine (a trade name: NOCRAC CD, manufactured by Ouchi Shinko Chemical Industrial Co., Ltd.)

Stabilizer (B2-1): Pentaerythritol tetrakis(3-lauryl thiopropionate) (a trade name: SUMILIZER TP-D, manufactured by Sumitomo Chemical Co., Ltd.)

Stabilizer (B2-2): 2-Mercapto benzimidazole (a trade name: NOCRAC MB, manufactured by Ouchi Shinko Chemical Industrial Co., Ltd.)

Stabilizer (B3-1): 3,9-Bis[2-[3-(3-t-butyl-4-hydroxy-5-methylphenyl)propionyloxy]-1,1-dimethylethyl]-2,4,8,10-tetraoxaspiro[5.5]undecane (a trade name: SUMILIZER GA-80, manufactured by Sumitomo Chemical Co., Ltd.)

Stabilizer (B3-2): N,N'-Hexamethylene bis(3,5-di-t-butyl-4-hydroxyhydrocinnamide) (a trade name: IRGANOX 1098, manufactured by BASF SE)

Stabilizer (B4-1): Bis(2,4-dicumylphenyl)pentaerythritol diphosphite (a trade name: ADEKA STAB PEP-45, manufactured by Adeka Corporation)

Stabilizer (B4-2): Tetrakis(2,4-di-t-butylphenyl)-4,4'-biphenylene diphosphonite (3,5-di-t-butyl-4-hydroxy-hydrocinnamide) (a trade name: IRGAFOS P-EPQ, manufactured by BASF SE)

Stabilizer (B5-1): Sodium iodide (manufactured by Wako Pure Chemical Industries, Ltd.)

Stabilizer (B5-2): Potassium iodide (manufactured by Wako Pure Chemical Industries, Ltd.)

Table 5

| | | | | Examples | | | | | Comparative Examples | |
|---|---|---|---|---|---|---|---|---|---|---|
| | | | | 2-1-1 | 2-1-2 | 2-1-3 | 2-1-4 | 2-1-5 | 2-1-1 | 2-1-2 |
| Composition | Diamine component (Molar ratio) | (a2-1) | ED-900 | 10 | 10 | 10 | 10 | 10 | - | 10 |
| | | (a-2) | Xylylenediamine | 90 | 90 | 90 | 90 | 90 | 100 | 90 |
| | | (MXDA/PXDA molar ratio) | | (100/0) | (100/0) | (100/0) | (100/0) | (100/0) | (100/0) | (100/0) |
| | Dicarboxylic acid (Molar ratio) | Adipic acid | | 100 | 100 | 100 | 100 | 100 | 100 | 100 |
| | Stabilizer (parts by mass)*1 | (B1-1) | NOCRAC White | 0.5 | - | - | - | - | - | - |
| | | (B2-1) | SUMILIZER TP-D | - | 0.5 | - | - | - | - | - |
| | | (B3-1) | SUMILIZER GA-80 | - | - | 0.5 | - | - | - | - |
| | | (B4-1) | ADEKA STAB PEP-45 | - | - | - | 0.5 | - | - | - |
| | | (B5-1) | Sodium iodide | - | - | - | - | 0.5 | - | - |
| Physical properties of polyether polyamide | Glass transition temperature (°C) | | | 42.1 | 42.1 | 42.1 | 42.1 | 42.1 | 86.1 | 42.1 |
| | Melting point (°C) | | | 227.5 | 227.5 | 227.5 | 227.5 | 227.5 | 239.8 | 227.5 |
| | Relative viscosity | | | 1.35 | 1.35 | 1.35 | 1.35 | 1.35 | 2.10 | 1.35 |
| Physical properties of film | Rate of tensile elongation at break (%) | | | 345 | 340 | 350 | 352 | 344 | 2.9 | 341 |
| | Tensile modulus (MPa) | | | 360 | 358 | 340 | 344 | 353 | 3100 | 355 |
| | Tensile strength retention rate (%) | | | 110 | 110 | 90 | 90 | 110 | 50 | 30 |

*1: Parts by mass as added based on 100 parts by mass of the polyether polyamide (A2)

Example 2-2-1

In a reaction vessel having a capacity of about 3 L and equipped with a stirrer, a nitrogen gas inlet, and a condensed water discharge port, 584.60 g of adipic acid, 0.6626 g of sodium hypophosphite monohydrate, and 0.4616 g of sodium acetate were charged, and after thoroughly purging the inside of the vessel with nitrogen, the mixture was melted at 170°C while feeding a nitrogen gas at a rate of 20 mL/min. A mixed liquid of 343.22 g of m-xylylenediamine (MXDA) (manufactured by Mitsubishi Gas Chemical Company, Inc.) and 147.10 g of p-xylylenediamine (PXDA) (manufactured by Mitsubishi Gas Chemical Company, Inc.) (molar ratio (MXDA/PXDA= 70/30)) and 360.00 g of a polyether diamine (a trade name: ED-900, available from Huntsman Corporation, USA) was added dropwise thereto while gradually raising the temperature to 260°C, and the mixture was polymerized for about 2 hours to obtain a polyether polyamide (A2). ηr = 1.34, [COOH] = 75.95 μeq/g, [$NH_2$] = 61.83 μeq/g, Mn = 14,516, Tg = 33.2°C, Tch = 73.9°C, Tm = 246.2°C

Subsequently, 100 parts by mass of the resulting polyether polyamide (A2) and 0.5 parts by mass of, as a stabilizer, N,N'-di-2-naphthyl-p-phenylenediamine (a trade name: NOCRAC White, manufactured by Ouchi Shinko Chemical Industrial Co., Ltd., stabilizer (B1-1)) were dry blended, and the blend was extrusion molded at a temperature of 270°C by using a twin-screw extruder equipped with a screw having a diameter of 30 mm and a T die, thereby obtaining a non-stretched film having a thickness of about 100 μm.

The resulting film was subjected to the above-described tensile test. Results are shown in Table 6.

Examples 2-2-2 to 2-2-5

Films were obtained in the same manner as that in Example 2-2-1, except for changing the kind of the stabilizer in Example 2-2-1 as shown in Table 6, and then subjected to the above-described tensile test. Results are shown in Table 6.

Comparative Example 2-2-1

In a reaction vessel having a capacity of about 3 L and equipped with a stirrer, a nitrogen gas inlet, and a condensed water discharge port, 730.8 g of adipic acid, 0.6322 g of sodium hypophosphite monohydrate, and 0.4404 g of sodium acetate were charged, and after thoroughly purging the inside of the vessel with nitrogen, the mixture was melted at 170°C while feeding a nitrogen gas at a rate of 20 mL/min. A mixed liquid of 476.70 g of m-xylylenediamine (MXDA) (manufactured by Mitsubishi Gas Chemical Company, Inc.) and 204.30 g of p-xylylenediamine (PXDA) (manufactured by Mitsubishi Gas Chemical Company, Inc.) (molar ratio (MXDA/PXDA = 70/30)) was added dropwise thereto while gradually raising the temperature to 275°C, and the mixture was polymerized for about 2 hours to obtain a polyamide. ηr = 2.07, [COOH] = 55.70 μeq/g, [$NH_2$] = 64.58 μeq/g, Mn = 16,623, Tg = 89.0°C, Tch =135.0°C, Tm = 257.0°C

The resulting polyamide was extrusion molded at a temperature of 275°C, thereby fabricating a non-stretched film having a thickness of about 100 μm.

The resulting film was subjected to the above-described tensile test. Results are shown in Table 6.

Comparative Example 2-2-2

The polyether polyamide (A2) obtained in Example 2-2-1 was extrusion molded at a temperature of 270°C, thereby fabricating a non-stretched film having a thickness of about 100 μm.

The resulting film was subjected to the above-described tensile test. Results are shown in Table 6.

Table 6

| | | | | Examples | | | | | Comparative Examples | |
|---|---|---|---|---|---|---|---|---|---|---|
| | | | | 2-2-1 | 2-2-2 | 2-2-3 | 2-2-4 | 2-2-5 | 2-2-1 | 2-2-2 |
| Composition | Diamine component (Molar ratio) | (a2-1) | ED-900 | 10 | 10 | 10 | 10 | 10 | - | 10 |
| | | (a-2) | Xylylenediamine | 90 | 90 | 90 | 90 | 90 | 100 | 90 |
| | | (MXDA/PXDA molar ratio) | | (70/30) | (70/30) | (70/30) | (70/30) | (70/30) | (70/30) | (70/30) |
| | Dicarboxylic acid (Molar ratio) | Adipic acid | | 100 | 100 | 100 | 100 | 100 | 100 | 100 |
| | Stabilizer (parts by mass) *1 | (B1-1) | NOCRAC White | 0.5 | - | - | - | - | - | - |
| | | (B2-2) | NOCRAC MB | - | 0.5 | - | - | - | - | - |
| | | (B3-1) | SUMILIZER GA-80 | - | - | 0.5 | - | - | - | - |
| | | (B4-2) | IRGAFOS P-EPQ | - | - | - | 0.5 | - | - | - |
| | | (B5-1) | Sodium iodide | - | - | - | - | 0.5 | - | - |
| Physical properties of polyether polyamide | Glass transition temperature (°C) | | | 33.2 | 33.2 | 33.2 | 33.2 | 33.2 | 89.0 | 33.2 |
| | Melting point (°C) | | | 246.2 | 246.2 | 246.2 | 246.2 | 246.2 | 257.0 | 246.2 |
| | Relative viscosity | | | 1.34 | 1.34 | 1.34 | 1.34 | 1.34 | 2.07 | 1.34 |
| Physical properties of film | Rate of tensile elongation at break (%) | | | 304 | 300 | 310 | 308 | 305 | 3.0 | 304 |
| | Tensile modulus (MPa) | | | 393 | 395 | 387 | 388 | 393 | 3522 | 391 |
| | Tensile strength retention rate (%) | | | 110 | 110 | 90 | 90 | 110 | 45 | 30 |

*1: Parts by mass as added based on 100 parts by mass of the polyether polyamide (A2)

Example 2-3-1

In a reaction vessel having a capacity of about 3 L and equipped with a stirrer, a nitrogen gas inlet, and a condensed water discharge port, 687.65 g of sebacic acid (sulfur atom concentration: 70 ppm), 0.6612 g of sodium hypophosphite monohydrate, and 0.4605 g of sodium acetate were charged, and after thoroughly purging the inside of the vessel with nitrogen, the mixture was melted at 170°C while feeding a nitrogen gas at a rate of 20 mL/min. A mixed liquid of 416.77 g of m-xylylenediamine (MXDA) (manufactured by Mitsubishi Gas Chemical Company, Inc.) and 306.00 g of a polyether diamine (a trade name: ED-900, manufactured by Huntsman Corporation, USA) was added dropwise thereto while gradually raising the temperature to 260°C, and the mixture was polymerized for about 2 hours to obtain a polyether polyamide (A2). ηr = 1.33, [COOH] = 96.88 μeq/g, $[NH_2]$ = 37.00 μeq/g, Mn = 14,939, Tg = 22.2°C, Tch = 43.0°C, Tm = 182.8°C A sulfur atom concentration in the polyether polyamide was 34 ppm.

Subsequently, 100 parts by mass of the resulting polyether polyamide (A2) and 0.5 parts by mass of, as a stabilizer, 4,4'-bis(α,α-dimethylbenzyl)diphenylamine (a trade name: NOCRAC CD, manufactured by Ouchi Shinko Chemical Industrial Co., Ltd., stabilizer (B1-2)) were dry blended, and the blend was extrusion molded at a temperature of 235°C by using a twin-screw extruder equipped with a screw having a diameter of 30 mm and a T die, thereby obtaining a non-stretched film having a thickness of about 100 μm.

The resulting film was subjected to the above-described tensile test and measurement of YI value. Results are shown in Table 7.

Examples 2-3-2 to 2-3-5

Films were obtained in the same manner as that in Example 2-3-1, except for changing the kind of the stabilizer in Example 2-3-1 as shown in Table 7, and then subjected to the above-described tensile test and measurement of YI value. Results are shown in Table 7.

Comparative Example 2-3-1

In a reaction vessel having a capacity of about 3 L and equipped with a stirrer, a nitrogen gas inlet, and a condensed water discharge port, 809.0 g of sebacic acid (sulfur atom concentration: 0 ppm), 0.6210 g of sodium hypophosphite monohydrate, and 0.4325 g of sodium acetate were charged, and after thoroughly purging the inside of the vessel with nitrogen, the mixture was melted at 170°C while feeding a nitrogen gas at a rate of 20 mL/min. 544.80 g of m-xylylenediamine (MXDA) (manufactured by Mitsubishi Gas Chemical Company, Inc.) was added dropwise thereto while gradually raising the temperature to 260°C, and the mixture was polymerized for about 2 hours to obtain a polyamide. ηr = 1.80, [COOH] = 88.5 μeq/g, $[NH_2]$ = 26.7 μeq/g, Mn = 17,300, Tg = 61.2°C, Tch = 114.1°C, Tm = 191.5°C

The resulting polyamide was extrusion molded at a temperature of 220°C, thereby fabricating a non-stretched film having a thickness of about 100 μm.

The resulting film was subjected to the above-described tensile test and measurement of YI value. Results are shown in Table 7.

Comparative Example 2-3-2

The polyether polyamide (A2) obtained in Example 2-3-1 was extrusion molded at a temperature of 220°C, thereby fabricating a non-stretched film having a thickness of about 100 μm.

The resulting film was subjected to the above-described tensile test and measurement of YI value. Results are shown in Table 7.

Table 7

| | | | | Examples | | | | | Comparative Examples | |
|---|---|---|---|---|---|---|---|---|---|---|
| | | | | 2-3-1 | 2-3-2 | 2-3-3 | 2-3-4 | 2-3-5 | 2-3-1 | 2-3-2 |
| Composition | Diamine component (Molar ratio) | (a2-1) | ED-900 | 10 | 10 | 10 | 10 | 10 | - | 10 |
| | | (a-2) | Xylylenediamine | 90 | 90 | 90 | 90 | 90 | 100 | 90 |
| | | (MXDA/PXDA molar ratio) | | (100/0) | (100/0) | (10010) | (100/0) | (100/0) | (100/0) | (100/0) |
| | Dicarboxylic acid | Sebacic acid (molar ratio) | | 100 | 100 | 100 | 100 | 100 | 100 | 100 |
| | | Sulfur atom concentration (ppm) | | 70 | 70 | 70 | 70 | 70 | - | - |
| | Stabilizer (parts by mass) *1 | (B1-2) | NOCRAC CD | 0.5 | - | - | - | - | - | - |
| | | (B2-1) | SUMILIZER TP-D | - | 0.5 | - | - | - | - | - |
| | | (B3-2) | IRGANOX 1098 | - | - | 0.5 | - | - | - | - |
| | | (B4-1) | ADEKA STAB PEP-45 | - | - | - | 0.5 | - | - | - |
| | | (B5-1) | Sodium iodide | - | - | - | - | 0.5 | - | - |
| Physical properties of polyether polyamide | Glass transition temperature (°C) | | | 22.2 | 22.2 | 22.2 | 22.2 | 22.2 | 61.2 | 22.2 |
| | Melting point (°C) | | | 182.8 | 182.8 | 182.8 | 182.8 | 182.8 | 191.5 | 182.8 |
| | Relative viscosity | | | 1.33 | 1.33 | 1.33 | 1.33 | 1.33 | 1.80 | 1.33 |
| | Sulfur atom concentration in polyether polyamide (ppm) | | | 34 | 34 | 34 | 34 | 34 | 0 | 0 |
| Physical properties of film | Rate of tensile elongation at break (%) | | | 403 | 400 | 407 | 405 | 405 | 45 | 402 |
| | Tensile modulus (MPa) | | | 298 | 300 | 292 | 294 | 299 | 1700 | 296 |
| | Tensile strength retention rate (%) | | | 110 | 110 | 90 | 90 | 110 | 40 | 30 |
| | Yellowness (YI) | | | 1.0 | 1.0 | 1.0 | 1.0 | 1.0 | 4.0 | 4.0 |

*1: Parts by mass as added based on 100 parts by mass of the polyether polyamide (A2)

Example 2-4-1

In a reaction vessel having a capacity of about 3 L and equipped with a stirrer, a nitrogen gas inlet, and a condensed water discharge port, 687.65 g of sebacic acid, 0.6612 g of sodium hypophosphite monohydrate, and 0.4605 g of sodium acetate were charged, and after thoroughly purging the inside of the vessel with nitrogen, the mixture was melted at 170°C while feeding a nitrogen gas at a rate of 20 mL/min. A mixed liquid of 291.74 g of m-xylylenediamine (MXDA) (manufactured by Mitsubishi Gas Chemical Company, Inc.) and 125.03 g of p-xylylenediamine (PXDA) (manufactured by Mitsubishi Gas Chemical Company, Inc.) (molar ratio (MXDA/PXDA = 70/30)) and 306.00 g of a polyether diamine (a trade name: ED-900, available from Huntsman Corporation, USA) was added dropwise thereto while gradually raising the temperature to 260°C, and the mixture was polymerized for about 2 hours to obtain a polyether polyamide (A2). ηr = 1.36, [COOH] = 66.35 μeq/g, [$NH_2$] = 74.13 μeq/g, Mn = 14,237, Tg = 16.9°C, Tch = 52.9°C, Tm = 201.9°C
Subsequently, 100 parts by mass of the resulting polyether polyamide (A2) and 0.5 parts by mass of, as a stabilizer, N,N'-di-2-naphthyl-p-phenylenediamine (a trade name: NOCRAC White, manufactured by Ouchi Shinko Chemical Industrial Co., Ltd., stabilizer (B1-1)) were dry blended, and the blend was extrusion molded at a temperature of 250°C by using a twin-screw extruder equipped with a screw having a diameter of 30 mm and a T die, thereby obtaining a non-stretched film having a thickness of about 100 μm.
The resulting film was subjected to the above-described tensile test. Results are shown in Table 8.

Examples 2-4-2 to 2-4-5

Films were obtained in the same manner as that in Example 2-4-1, except for changing the kind of the stabilizer in Example 2-4-1 as shown in Table 8, and then subjected to the above-described tensile test. Results are shown in Table 8.

Examples 2-4-6 to 2-4-8

Films were obtained in the same manner as that in Example 2-4-1 or 2-4-2, except for changing the addition amount of the stabilizer in Example 2-4-1 or 2-4-2 as shown in Table 8, and then subjected to the above-described tensile test. Results are shown in Table 8.

Examples 2-4-9 to 2-4-11

Films were obtained in the same manner as that in Example 2-4-1, except for changing the kind and addition amount of the stabilizer in Example 2-4-1 as shown in Table 8, and then subjected to the above-described tensile test. Results are shown in Table 8.

Comparative Example 2-4-1

In a reaction vessel having a capacity of about 3 L and equipped with a stirrer, a nitrogen gas inlet, and a condensed water discharge port, 829.2 g of sebacic acid, 0.6365 g of sodium hypophosphite monohydrate, and 0.4434 g of sodium acetate were charged, and after thoroughly purging the inside of the vessel with nitrogen, the mixture was melted at 170°C while feeding a nitrogen gas at a rate of 20 mL/min. A mixed liquid of 390.89 g of m-xylylenediamine (MXDA) (manufactured by Mitsubishi Gas Chemical Company, Inc.) and 167.53 g of p-xylylenediamine (PXDA) (manufactured by Mitsubishi Gas Chemical Company, Inc.) (molar ratio (MXDA/PXDA = 70/30)) was added dropwise thereto while gradually raising the temperature to 260°C, and the mixture was polymerized for about 2 hours to obtain a polyether polyamide. ηr = 2.20, [COOH] = 81.8 μeq/g, [$NH_2$] = 26.9 μeq/g, Mn = 18,400, Tg = 65.9°C, Tch = 100.1°C, Tm = 213.8°C
The resulting polyamide was extrusion molded at a temperature of 240°C, thereby fabricating a non-stretched film having a thickness of about 100 μm.
The resulting film was subjected to the above-described tensile test. Results are shown in Table 8.

Comparative Example 2-4-2

The polyether polyamide (A2) obtained in Example 2-4-1 was extrusion molded at a temperature of 260°C, thereby fabricating a non-stretched film having a thickness of about 100 μm.
The resulting film was subjected to the above-described tensile test. Results are shown in Table 8.

Table 8

| | | | | Examples | | | | | | | | | | | Comparative Examples | |
|---|---|---|---|---|---|---|---|---|---|---|---|---|---|---|---|---|
| | | | | 24-1 | 24-2 | 2-4-3 | 2-4-4 | 2-4-5 | 2-4-6 | 2-4-7 | 2-4-8 | 2-4-9 | 24-10 | 2-4-11 | 2-4-1 | 24-2 |
| Composition | Diamine component (Molar ratio) | (a2-1) ED-900 | | 10 | 10 | 10 | 10 | 10 | 10 | 10 | 10 | 10 | 10 | 10 | - | 10 |
| | | (a-2) Xylylenediamine | | 90 | 90 | 90 | 90 | 90 | 90 | 90 | 90 | 90 | 90 | 90 | 100 | 90 |
| | | (MXDA/PXDA molar ratio) | | (70/30) | (70/30) | (70/30) | (70/30) | (70/30) | (70/30) | (70/30) | (70/30) | (70/30) | (70/30) | (70/30) | (70/30) | (70/30) |
| | Dicarboxylic acid (Molar ratio) | Sebacic acid | | 100 | 100 | 100 | 100 | 100 | 100 | 100 | 100 | 100 | 100 | 100 | 100 | 100 |
| | Stabilizer (parts by mass) *1 | (B1-1) | NOCRAC White | 0.5 | - | - | - | - | 0.01 | 1.0 | - | 0.5 | 0.9 | 0.05 | - | - |
| | | (B2-1) | SUMILIZER TP-D | - | 0.5 | - | - | - | - | - | 1.0 | 0.5 | 0.3 | 1.0 | - | - |
| | | (B3-1) | SUMILIZER GA-80 | - | - | 0.5 | - | - | - | - | - | - | - | - | - | - |
| | | (B4-1) | ADEKA STAB PEP-45 | - | - | - | 0.5 | - | - | - | - | - | - | - | - | - |
| | | (B5-2) | Potassium chloride | - | - | - | - | 0.5 | - | - | - | - | - | - | - | - |
| Physical properties of polyether polyamide | Glass transition temperature (°C) | | | 16.9 | 16.9 | 16.9 | 16.9 | 16.9 | 16.9 | 16.9 | 16.9 | 16.9 | 16.9 | 16.9 | 65.9 | 12.9 |
| | Melting point (°C) | | | 201.9 | 201.9 | 201.9 | 201.9 | 201.9 | 201.9 | 201.9 | 201.9 | 201.9 | 201.9 | 201.9 | 213.8 | 204.5 |
| | Relative viscosity | | | 1.36 | 1.36 | 1.36 | 1.36 | 1.36 | 1.36 | 1.36 | 1.36 | 1.36 | 1.36 | 1.36 | 2.20 | 1.31 |
| Physical properties of film | Rate of tensile elongation at break (%) | | | 392 | 390 | 395 | 397 | 394 | 393 | 398 | 404 | 399 | 392 | 396 | 3.4 | 359 |
| | Tensile modulus (MPa) | | | 320 | 322 | 315 | 314 | 320 | 319 | 317 | 314 | 323 | 321 | 318 | 2030 | 700 |
| | Tensile strength retention rate (%) | | | 110 | 110 | 90 | 90 | 110 | 89 | 85 | 85 | 130 | 115 | 95 | 45.0 | 30.0 |

*1: Parts by mass as added based on 100 parts by mass of the polyether polyamide (A2)

From the results shown in Tables 5 to 8, it is noted that the polyether polyamide composition of the present invention is a material which is excellent in terms of not only melt moldability, crystallinity, and flexibility but heat stability and heat aging resistance.

INDUSTRIAL APPLICABILITY

The polyether polyamide composition of the present invention has excellent heat stability and heat aging resistance while holding melt moldability, toughness, flexibility, and rubbery properties of an existing polyamide elastomer. For that reason, the polyether polyamide composition of the present invention can be suitably used for various industrial parts, gears and connectors of mechanical and electrical precision instruments, fuel tubes around an automobile engine, connector parts, sliding parts, belts, hoses, electric parts and electronic parts such as silent gears, etc., sporting goods, and the like.

## Claims

1. A polyether polyamide composition comprising a polyether polyamide (A1) in which a diamine constituent unit thereof is derived from a polyether diamine compound (a1-1) represented by the following general formula (1) and a xylylenediamine (a-2), and a dicarboxylic acid constituent unit thereof is derived from an α,ω-linear aliphatic dicarboxylic acid having from 4 to 20 carbon atoms and a stabilizer (B):

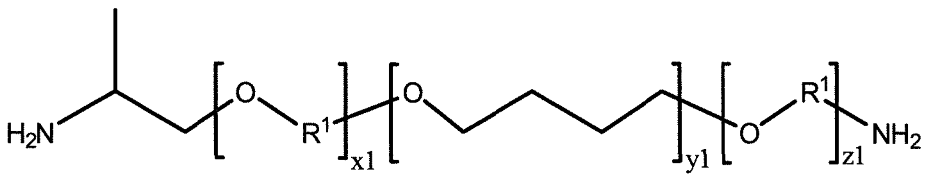
(1)

wherein (x1 + z1) is from 1 to 30; y1 is from 1 to 50; and $R^1$ represents a propylene group.

2. The polyether polyamide composition according to claim 1, wherein the stabilizer (B) is at least one member selected from the group consisting of an amine compound (B1), an organic sulfur compound (B2), a phenol compound (B3), a phosphorus compound (B4), and an inorganic compound (B5).

3. The polyether polyamide composition according to claim 1 or 2, wherein a content of the stabilizer (B) is from 0.01 to 1 part by mass based on 100 parts by mass of the polyether polyamide (A1).

4. The polyether polyamide composition according to any one of claims 1 to 3, wherein the xylylenediamine (a-2) is m-xylylenediamine, p-xylylenediamine, or a mixture thereof.

5. The polyether polyamide composition according to any one of claims 1 to 4, wherein the xylylenediamine (a-2) is m-xylylenediamine.

6. The polyether polyamide composition according to any one of claims 1 to 4, wherein the xylylenediamine (a-2) is a mixture of m-xylylenediamine and p-xylylenediamine.

7. The polyether polyamide composition according to claim 6, wherein a proportion of the p-xylylenediamine relative to a total amount of m-xylylenediamine and p-xylylenediamine is 90% by mole or less.

8. The polyether polyamide composition according to any one of claims 1 to 7, wherein the α,ω-linear aliphatic dicarboxylic acid having from 4 to 20 carbon atoms is at least one member selected from the group consisting of adipic acid and sebacic acid.

9. The polyether polyamide composition according to any one of claims 1 to 8, wherein a proportion of the constituent unit derived from the xylylenediamine (a-2) in the diamine constituent unit is from 50 to 99.8% by mole.

10. The polyether polyamide composition according to any one of claims 1 to 9, wherein a relative viscosity of the polyether polyamide composition is from 1.1 to 3.0.

**11.** The polyether polyamide composition according to any one of claims 1 to 10, wherein a melting point of the polyether polyamide composition is from 170 to 270°C.

**12.** The polyether polyamide composition according to any one of claims 1 to 11, wherein a tensile strength retention rate calculated according to the following equation is 75% or more:

Tensile strength retention rate (%) = [{Breaking stress of film after heat treatment at 130°C for 72 hours (MPa)}/{Breaking stress of film before heat treatment at 130°C for 72 hours (MPa)}] × 100

**13.** The polyether polyamide composition according to any one of claims 1 to 12, wherein the stabilizer (B) is at least one member selected from the group consisting of an amine compound (B1), an organic sulfur compound (B2), and an inorganic compound (B5).

**14.** A molded article comprising the polyether polyamide composition according to any one of claims 1 to 13.

**15.** The molded article according to claim 14, which is a hose, a tube, or a metal covering material.

**16.** A polyether polyamide composition comprising a polyether polyamide (A2) in which a diamine constituent unit thereof is derived from a polyether diamine compound (a2-1) represented by the following general formula (2) and a xylylenediamine (a-2), and a dicarboxylic acid constituent unit thereof is derived from an α,ω-linear aliphatic dicarboxylic acid having from 4 to 20 carbon atoms and a stabilizer (B):

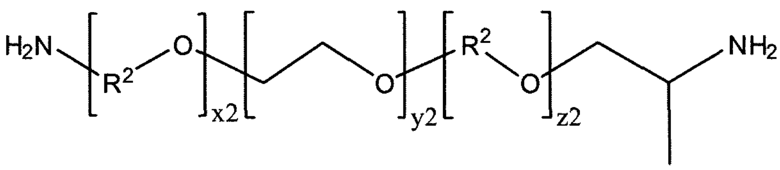

(2)

wherein (x2 + z2) is from 1 to 60; y2 is from 1 to 50; and $R^2$ represents a propylene group.

**17.** The polyether polyamide composition according to claim 16, wherein the stabilizer (B) is at least one member selected from the group consisting of an amine compound (B1), an organic sulfur compound (B2), a phenol compound (B3), a phosphorus compound (B4), and an inorganic compound (B5).

**18.** The polyether polyamide composition according to claim 16 or 17, wherein a content of the stabilizer (B) is from 0.01 to 1 part by mass based on 100 parts by mass of the polyether polyamide (A2).

**19.** The polyether polyamide composition according to any one of claims 16 to 18, wherein the xylylenediamine (a-2) is m-xylylenediamine, p-xylylenediamine, or a mixture thereof.

**20.** The polyether polyamide composition according to any one of claims 16 to 19, wherein the xylylenediamine (a-2) is m-xylylenediamine.

**21.** The polyether polyamide composition according to any one of claims 16 to 20, wherein the xylylenediamine (a-2) is a mixture of m-xylylenediamine and p-xylylenediamine.

**22.** The polyether polyamide composition according to claim 21, wherein a proportion of the p-xylylenediamine relative to a total amount of m-xylylenediamine and p-xylylenediamine is 90% by mole or less.

**23.** The polyether polyamide composition according to any one of claims 16 to 22, wherein the α,ω-linear aliphatic dicarboxylic acid having from 4 to 20 carbon atoms is at least one member selected from the group consisting of adipic acid and sebacic acid.

**24.** The polyether polyamide composition according to any one of claims 16 to 23, wherein a proportion of the constituent unit derived from the xylylenediamine (a-2) in the diamine constituent unit is from 50 to 99.8% by mole.

**25.** The polyether polyamide composition according to any one of claims 16 to 24, wherein a relative viscosity of the

polyether polyamide composition is from 1.1 to 3.0.

**26.** The polyether polyamide composition according to any one of claims 16 to 25, wherein a melting point of the polyether polyamide composition is from 170 to 270°C.

**27.** The polyether polyamide composition according to any one of claims 16 to 26, wherein a tensile strength retention rate calculated according to the following equation is 75% or more:

Tensile strength retention rate (%) = [{Breaking stress of film after heat treatment at 130°C for 72 hours (MPa)}/{Breaking stress of film before heat treatment at 130°C for 72 hours (MPa)}] $\times$ 100

**28.** The polyether polyamide composition according to any one of claims 16 to 27, wherein the stabilizer (B) is at least one member selected from the group consisting of an amine compound (B1), an organic sulfur compound (B2), and an inorganic compound (B5).

**29.** A molded article comprising the polyether polyamide composition according to any one of claims 16 to 28.

**30.** The molded article according to claim 29, which is a hose, a tube, or a metal covering material.

**INTERNATIONAL SEARCH REPORT**

International application No.
PCT/JP2013/071838

A. CLASSIFICATION OF SUBJECT MATTER
*C08L77/06*(2006.01)i, *C08G69/40*(2006.01)i, *C08K5/00*(2006.01)i

According to International Patent Classification (IPC) or to both national classification and IPC

B. FIELDS SEARCHED

Minimum documentation searched (classification system followed by classification symbols)
C08K3/00-13/08, C08L1/00-101/14, C08G69/00-69/50

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A<br>Y | WO 2010/047315 A1 (Ube Industries, Ltd.), 29 April 2010 (29.04.2010), claims 1, 6; paragraphs [0073] to [0075], [0094] & TW 201030098 A | 1-15<br>16-30<br>1-30 |
| Y | JP 2006-028314 A (Daicel-Degussa Ltd.), 02 February 2006 (02.02.2006), claim 3; paragraphs [0044] to [0045], [0049], [0107], [0120], [0137] (Family: none) | 1-30 |
| A | WO 2012/090797 A1 (Mitsubishi Gas Chemical Co., Inc.), 05 July 2012 (05.07.2012), claim 1; paragraphs [0025] to [0026] & AU 2011351048 A & TW 201231554 A | 1-30 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 September, 2013 (26.09.13) | 08 October, 2013 (08.10.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/071838

C (Continuation). DOCUMENTS CONSIDERED TO BE RELEVANT

| Category* | Citation of document, with indication, where appropriate, of the relevant passages | Relevant to claim No. |
|---|---|---|
| E,A | WO 2013/133145 A1 (Toyobo Co., Ltd.), 12 September 2013 (12.09.2013), claims; examples (Family: none) | 1-30 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004161964 A
- JP 2004346274 A